# EUROPÄISCHE PATENTSCHRIFT

(11) **EP 3 259 698 B1**
(45) Veröffentlichungstag und Bekanntmachung des Hinweises auf die Patenterteilung: **09.12.2020**
(21) Anmeldenummer: 16706141.5
(22) Anmeldetag: 16.02.2016
(51) Int. Cl.: G06F 21/57

(54) **AUTONOM BOOTENDES SYSTEM MIT EINEM SICHERHEITSMODUL**
AUTONOMOUSLY BOOTING SYSTEM WITH A SECURITY MODULE
SYSTÈME D'AMORÇAGE AUTONOME AVEC UN MODULE DE SÉCURITÉ

(30) Priorität: 16.02.2015 DE 102015001801
(43) Veröffentlichungstag der Anmeldung: 27.12.2017
(73) Patentinhaber: iAd Gesellschaft für Informatik, Automatisierung und Datenverarbeitung mbH, 90613 Grosshabersdorf (DE)
(72) Erfinder: HAMPEL, Hermann, 90613 Grosshabersdorf (DE); HAMPEL, Johannes, 90613 Grosshabersdorf (DE); GÖTZFRIED, Johannes, 91052 Erlangen (DE)
(74) Vertreter: Dreykorn-Lindner, Werner
(86) Internationale Anmeldenummer: PCT/EP2016/025014
(87) Internationale Veröffentlichungsnummer: WO 2016/131553

(56) Entgegenhaltungen:
- EP-A1- 2 635 991
- US-A1- 2009 193 211
- US-A1- 2011 022 832
- US-A1- 2015 012 737
- US-B1- 8 756 417

## Beschreibung

Die Erfindung betrifft, gemäß dem Patentanspruch 1 ein Verschlüsselungssystem mit einem applikationsspezifischen integrierten Schaltkreis ASIC, welcher einen Permanentspeicher für die nicht-flüchtige Speicherung vom Betriebssystem eines Prozessors und Softwaremodulen für die Verschlüsselung des Datenspeichers des Prozessors und welcher einen hardwaremäßig implementierten Verschlüsselungsalgorithmus aufweist. Weiterhin betrifft die Erfindung gemäß Patentanspruch 11 ein mehrstufiges sicheres Bootverfahren hierfür.

Eine Implementierung eines physikalischen Schutzmechanismus für Desktop Computer und Notebooks ist auf existierende Handels-Hardware angewiesen, welche in dem Großteil solcher Geräte verbaut ist. Die einzige Hardware, welcher es möglich ist "Trusted Bootstrapping" auf Desktop Computern und Notebooks zu unterstützen, ist das "Trusted Plattform Module TPM", welches Bindung, Versiegelung und Fern-Attestierung für Software leistet. Jedoch gibt es neben dem "Trusted Plattform Module" keinen Hardware Support und Schlüssel zur Disk-Verschlüsselung können nicht in speziellen Schlüsselregistern gespeichert werden, sondern müssen im RAM gespeichert werden. Im Gegensatz dazu ist eine maßgeschneiderte Implementierung für ein gegebenes eingebettetes System in der Lage spezielle Hardware zu verwenden, welche "Trusted Bootstrapping" unterstützt und dedizierten Speicher für Schlüsselmaterial bereitstellt. Kryptographische Operationen können direkt auf dem dedizierten Speicher ausgeführt werden, ohne Verwendung des nicht vertrauenswürdigen RAMs.

Geschlossene-Konsumer-Plattform-Hardware wie Spielkonsolen, Kameras oder Boxen zum Empfang von Pay-TV sind mit physikalischen Schutzmechanismen ausgestattet, um sowohl das Auslesen von geheimen Schlüsseln, welche in den Software-Images eingebettet sind, als auch "Jailbreaking" zu verhindern, z.B. einen Angreifer davon abzuhalten, dass Geschlossene-Plattform-Geräte in ein "General-Purpose"-Gerät umgewandelt werden, auf welchen benutzerdefinierter Code ausgeführt werden könnte.

Es wurden bereits eine Reihe damit verbundener Arbeiten im Bereich von sicherem Code und Datenspeicherung durchgeführt, insbesondere Arbeiten zu den permanenten physikalischen Speichern. Neben klassischem FDE (Full Disk Encryption = Festplattenverschlüsselung , welche für die gesamte Festplatte oder einzelne Partitionen durchgeführt werden kann), können Microsoft Bitlocker [siehe M. Corporation. Windows BitLocker Drive Encryption: Technical Overview. Microsoft, July 2009.] und MARK [siehe J. Götzfried and T. Müller. Mutual Authentication and Trust Bootstrapping towards Secure Disk Encryption, volume 17. New York, NY, USA, 2 edition, 2014] als vollständige Fulltime-Disk-Verschlüsselungslösungen charakterisiert werden, welche "Trusted Bootstrapping" bereitstellen, wobei mindestens zwei Parteien beteiligt sind. Die "Trusted Plattform Module TPM" ist nicht für die Authentifizierung von Applikationen oder die Verschlüsselung der Software vorgesehen, der Schlüsselspeicherplatz ist begrenzt und es kann eine lokale und /oder abgesetzte Authentifizierung stattfinden, dabei wird notwendiges Schlüsselmaterial im Klartext in das Modul eingebracht.

Im Gegensatz dazu ist eine maßgeschneiderte Implementierung für ein gegebenes eingebettetes System in der Lage spezielle Hardware zu verwenden, welche "Trusted Bootstrapping" unterstützt und dedizierten Speicher für Kodierungsschlüssel bereitstellt. Kryptographische Operationen können direkt auf dem dedizierten Speicher ausgeführt werden, ohne Verwendung eines nicht-vertrauenswürdigen Speichers. Das Konzept zur Speicherung von Chiffrierungsschlüsseln außerhalb des internen / externen Speichers wurde auch auf Embedded-Systeme übertragen.

Zusätzlich existieren unterschiedliche Ansätze zum Schutz des Schlüsselmaterials für Full-Disk-Verschlüsselungslösungen, welche Chiffrierungsschlüssel komplett außerhalb des RAMs speichern, z.B. Loop-Amnesia [siehe Patrick Simmons. Security Through Amnesia: A Software-Based Solution to the Cold Boot Attack on Disk Encryption, in Annual Computer Security Applications Conference (ACSAC), Orlando, Florida USA, Dec. 2011, University of Illinois at Urbana-Champaign, ACM] und TRESOR [siehe T. Müller, F. Freiling, and A. Dewald. TRESOR Runs Encryption Securely Outside RAM, in 20th USENIX Security Symposium, San Francisco, California, Aug. 2011. Universität Erlangen-Nürnberg, USENIX Association].

Ein weiterer Ansatz ist ein Safe and Secure Bootloader (siehe Datenblatt Atmel AT02333: Safe and Secure Bootloader Implementation for SAM3/4, veröffentlicht 06/2013), bei dem eine feste Kopplung zwischen einem Bootloader und einer Firmware/Applikation erforderlich ist, bei dem in der Regel eine komplizierte Schlüsselhierarchie nicht unterstützt wird und bei dem nur eine Applikation möglich ist. Die Applikation ist nur während eines Updates verschlüsselt und wird anschließend als Klartext im internen Flash hinterlegt, welches durch entsprechende Maßnahmen geschützt wird. Weiterhin ist kryptografisches Material im Klartext im Standardspeicher hinterlegt, ein Update des Bootloaders ist nicht vorgesehen und per Software wird der Zugriff auf den Bootbereich abgeschaltet. Dabei kann mittels Hardware Unterstützung zwischen zwei Versionen der gleichen Software hin und her geschalten werden.

Weiterhin ist aus der DE 10 2009 048 756 A1 ein Verfahren und eine Anordnung zur Verbesserung der Sicherheit von verschlüsselten Computerdaten bekannt. Das Verfahren zur Verbesserung der Sicherheit eines verschlüsselten, Datenspeichers, von dem ein Computer bootet, umfasst ein Festplattenverschlüsselungsprogramm, das aus einem Bootbereich des Datenspeichers erstmalig geladen wird, und das Benutzereingaben (sogenannte CREDENTIALS) anfordert, um den Bootvorgang fortzusetzen und um den Datenspeicher zu entschlüsseln. Weiterhin umfasst das Verfahren ein Schlüsselgerät, von dem aus gebootet wird, bevor vom Bootbereich des verschlüsselten Datenspeicher gebootet wird, und das einen durch eine Smartcard-PIN Hardware-gesicherten Speicherbereich aufweist, in dem die CREDENTIALS verschlüsselt abgelegt sind. Im Einzelnen umfasst das aus der DE 10 2009 048 756 A1 bekannte Verfahren die Schritte:
- Booten des Computers vom Schlüsselgerät,
- Aufforderung zur Eingabe der Smartcard-PIN durch den Benutzer,
- Entschlüsseln der CREDENTIALS mit Hilfe der Smartcard-Hardware des Schlüsselgerätes und laden dieser in einen Arbeitsspeicher des Computers;
- Fortsetzung des Bootvorgangs vom Datenspeichers und somit mit dem Festplattenverschlüsselungsprogramms;
- Automatische Übergabe der CREDENTIALS an das Festplattenverschlüsselungsprogramm, wenn dieses die Eingabe der CREDETNIALS verlangt/anfordert.

Das aus der DE 10 2009 048 756 A1 bekannte Schlüsselgerät zur Durchführung des Verfahrens umfasst
- eine Schnittstelle zum Verbinden mit dem Computer, die ein Booten des Computers vom Schlüsselgerät ermöglicht, bevor vom Bootbereich des verschlüsselten Datenspeicher gebootet wird,
- einen Krypto-Prozessor, der auf der Basis einer Smartcard-PIN die CREDENTIALS verschlüsselt auf dem Schlüsselgerät ablegt, so dass diese hardwareseitig geschützt sind und
- Mittel, um nach Eingabe der Smartcard-PIN die CREDENTIALS zu entschlüsseln, um diese dann automatisch an das Festplattenverschlüsselungsprogramm zu übergeben.

Die Lösung gemäß der DE 10 2009 048 756 A1 weist eine Smartcard zum Speichern der Schlüssel und einen zusätzlichen Bootloader auf, um die Integrität des eigentlichen Bootloaders zu verifizieren und durch Eingabe einer kurzen PIN durch den Benutzer den Schlüssel für die Entschlüsselung der Festplatte bereit zu stellen. Diese Lösung benötigt eine zweite Partei und besteht demzufolge aus zwei Geräten. Eine mögliche Sicherheitslücke ergibt sich aus der nicht verschlüsselten Kommunikation zwischen Smartcard und Bootloader bzw. Arbeitsspeicher, welche belauscht werden kann. Wenn physikalischer Zugriff auf den PC möglich ist, kann die komplette Festplatte kopiert und eine Wanze auf dem USB-Port installiert werden, so dass der Datenaustausch mitgeschnitten und somit sowohl der Key als auch die Daten ausgelesen werden können.

Weiterhin ist aus der DE 100 569 89 A1 ein Verschlüsselungssystem mit einem Applikationsspezifischen integrierten Schaltkreis (ASIC) zur Ver- und Entschlüsselung von Datenströmen mit einer CPU und ggf. mit einem Coprozessor sowie mindestens einem hardwaremäßig implementierten Verschlüsselungsalgorithmus, bekannt. Um einen ASIC zu schaffen, der eine hohe Sicherheit aufweist und gleichzeitig einen hohen Datendurchsatz garantiert, weist der ASIC ein PCMCIA-Interface mit einer Wirkverbindung zu einer PCMCIA-Karte auf, die als Datenbankspeicher von Schlüsselinformationen ausgebildet ist. Bei Serversystemen ist eine schnelle Verfügbarkeit von vielen Schlüsseln erforderlich. Die Sicherheit erfordert es, dass diese sich im Speicher des ASICs befinden und nicht dem Hostsystem zugänglich sind. Damit bei einem Systemausfall diese Schlüssel nicht verlorengehen, wird die Schlüsseldatenbank auf einer PCMCIA-Karte abgespeichert. Sollte es zu einem Systemausfall kommen, kann die Karte problemlos in ein neues System gesteckt werden, so dass keine aufwendigen Recovery-Aktionen durchgeführt werden müssen. Weiterhin weist der ASIC ein RS232-Interface auf, welches das Einlesen von Schlüsseldaten, die auf Smartcards gespeichert sind, direkt in den ASIC ermöglicht. Damit wird das Ausspionieren von Schlüsseldaten durch Trojaner auf dem PC verhindert und es gibt keine Möglichkeit, die Schlüsseldaten über einen PC aus dem ASIC auszulesen. Auch weist der ASIC eine embedded Flash Option auf, wobei die embedded Flash Option vorzugsweise mit einem Schreibschutzmechanismus versehen ist, ferner ein Modul für eine Intrusion Detection und ein Modul für die Erzeugung von auf physikalischen Effekten basierenden Zufallszahlen. Die Flash Option ist notwendig, um direkt auf dem ASIC einen nicht flüchtigen Speicher für das Betriebssystem und die Software bereitzustellen. Das hat den Vorteil, dass kein externer Speicher erforderlich ist, den man auslesen könnte. Somit sind die integrierten Programmabläufe geschützt. Das Intrusion Detection weist den Vorteil auf, dass sobald ein unberechtigter Eingriff in die Struktur erfolgt, dieser erkannt und das System so zurückgesetzt wird und dass die ausgelesenen Daten ohne Nutzen für den Angreifer sind. Die Ver- und Entschlüsselungseinheiten sind mit unterschiedlichen und nicht statischen Schlüsseln betreibbar. Schließlich weist der ASIC ein Modul für ein Keymanagement und ein Modul für eine digitale Signatur auf. Seine volle Leistungsfähigkeit und die vollständige Abdeckung möglicher Verschlüsselungsaufgaben erlangt der ASIC durch seine zusätzlich separat integrierten Module für die digitale Signatur und die Zertifizierung, die asymmetrische Verschlüsselung und durch Schlüsselaustauschprotokolle, durch Einwegfunktionen (Hash-Algorihmen) sowie durch Standardalgorithmen auf symmetrischer Basis. Das Vorhandensein von Standardalgorithmen ermöglicht den Einsatz der ASICs innerhalb heterogener Kommunikationslandschaften und sichert somit also die Kompatibilität zu anderen Produkten. Weiterhin ist vorgesehen, dass mehrere PCI-Karten mit je einem ASIC parallel zusammengeschaltet sind, die zusammen eine Wirkverbindung zu der Smartcard und der PCMCIA-Back-up-Karte aufweisen. Eine solche PCI-Karte eignet sich besonders zur Online-Verschlüsselung von mit hohen Bandbreiten versehenen Kommunikationskanälen im Internet und in firmeneigenen Intranets. Insbesondere VPN-Anwendungen (Virtual Private Network) auf Gateways und Routern wird somit die Grundlage gegeben. Besonders geeignet ist die Karte auch für die Sicherung von Speichermedien (Festplatten, Backup-Systemen, ...) und die Verschlüsselung von Datenbankanwendungen. Insbesondere in Verbindung mit einer Ausgestaltung, bei der der Programmspeicher mit einem nicht deaktivierbaren Schreibschutz versehen ist, wobei insbesondere das Betriebssystem und/oder die Zufallszahlenaufbereitung und/oder eine Seriennummer und/oder ein Zertifizierungsschlüssel und/oder ein Speicher für Initialisierungsparameter für die analogen Schaltungen schreibgeschützt ausgebildet sind, ergibt sich eine besonders hohe Sicherheit. Das auf der integrierten CPU laufende Betriebssystem samt Software verwaltet und steuert alle Vorgänge auf dem ASIC. Es darf daher keine Möglichkeit geben, diese Daten auszulesen oder zu manipulieren. Bei externen Speicherbausteinen wäre diese Möglichkeit allerdings vorhanden, so dass das System darauf verzichtet und die gesamte Software direkt auf dem ASIC speichert. Dazu wird ein 256 KByte großer Flashspeicher genutzt auf dem das Betriebssystem, Initialisierungs- und Konfigurationsdaten sowie weitere Software dauerhaft gespeichert ist. Es ist möglich, im Nachhinein kundenspezifische Software im Systemspeicher unterzubringen, um somit eine höhere Performance bei der Endanwendung zu erreichen. Ein Teil des Speichers ist mit einem nicht deaktivierbaren Schreibschutz versehen. In diesen schreibgeschützten Bereich fallen Teile des Betriebssystems, die Zufallszahlenaufbereitung, die Seriennummer des ASICs, bestimmte Zertifizierungsschlüssel (z. B. von Trust Centern) sowie verschiedene Initialisierungsparameter für die analogen Schaltungen. Auf dem ASIC selbst ist ein 32 Bit RISC- Prozessor integriert. Dieser ist zusätzlich mit einem CoProzessor für Multiplikations- und Divisionsarithmetik ausgestattet. Der Prozessor hat die Steuerungsfunktion über den gesamten ASIC. Des Weiteren übernimmt er diverse andere Aufgaben, wie die Aufbereitung der Zufallszahlen, die Bildung von Hashfunktionen sowie die Abarbeitung von kundenspezifischen Algorithmen. Es besteht außerdem die Möglichkeit, komplexe Netzwerkprotokolle auf dem Prozessor zu implementieren, womit die Möglichkeit gegeben ist, den ASIC zusammen mit einem Netzwerk-ASIC zu betreiben und so ein von einem Hostrechner unabhängiges eigenständiges System (Netzwerkrouter mit Verschlüsselungsfunktion) zu verwirklichen. Das Verschlüsselungssystem gemäß der DE 100 569 89 A1 beschreibt ein Sicherheitsmodul in verschiedenen Ausbaustufen (Kopplung mehrerer ASICs) mit unterschiedlichen Schnittstellen (PCMCIA, PCI etc.), welches als Nachrüstoption für Standard-Hardware dient, um einerseits die IT-Sicherheit zu verbessern und andererseits - im Vergleich zu einer software-basierten Implementierung ohne Sicherheitsmodul - auch den Datendurchsatz zu erhöhen. Eine Anregung für einen sicheren und autonomen Bootprozess, insbesondere dass ein sicherer Bootvorgang notwendig wäre ist der DE 100 569 89 A1 nicht zu entnehmen, sondern nur ein Beschleuniger für kryptografische Aufgaben zur Verschlüsselung von Festplatten. Das Einbringen von Schlüsselmaterial ist entweder nur im Klartext oder bedingt verschlüsselt durch entsprechende Schlüsselaustauschprotokolle möglich. Die Schlüssel müssen dabei innerhalb des Sicherheitsmoduls gespeichert sein, damit sie vor unbefugten Zugriff durch Dritte sicher sind. Dabei ist die maximale Anzahl an parallel verwendbaren Schlüsseln durch die Größe des Schlüsselspeichers innerhalb des ASICs begrenzt. Da sowohl der Bootprozess als auch der Betrieb des Systems unter Aufsicht stattfindet ist es ausreichend, den integrierten internen Permanentspeicher, welcher ggf. als Read-Only-Memory ausgeführt ist, zur sicheren und manipulationsresistenten Verwahrung der auszuführenden Software (OS, Algorithmen, Schnittstellen und Applikation) zu verwenden. Dabei steht der Schutz der Software vor Manipulationen im Vordergrund, welcher durch entsprechende Hardwaremaßnahmen bedingt gewährleistet werden kann, um die korrekte Funktionalität des Sicherheitsmoduls nicht zu kompromittieren. Durch die Ausgestaltung für den Einsatz als kryptografischer Beschleuniger ist das aus der DE 100 569 89 A1 bekannte Verfahren aufgrund mangelnder Integration in die Prozesse weder zum sicheren Booten von Desktop-Rechnern noch zum sicheren und autonomen Booten von eingebetteten Systemen anwendbar.

Schließlich ist aus der EP 2 741 228 A2 ein System-on-Chip (SoC, Ein-Chip-System, d.h. die Integration aller oder eines großen Teils der Funktionen eines Systems auf einem Chip (Die)) zur Durchführung eines sicheren Neustarts, eine Bilderzeugungsvorrichtung damit und Verfahren dafür bekannt. Das System-on-Chip enthält einen ersten Speicher in Form eines ROM-Speichers (Read Only Memory), um eine Vielzahl von Verschlüsselungsschlüsseln/Bootdaten zu speichern, einen zweiten Speicher in Form eines Static Random Access Memory (SRAM), um die entschlüsselten Daten zu speichern und einen dritten Speicher in Form eines (eFuse) Speichers, um einen Einstellwert für Verschlüsselungsschlüssel zu speichern. Weiterhin sind mindestens zwei mit einer CPU durch Umschaltung gekoppelte Speicher-Controller vorgesehen. Der erste Speicher-Controller regelt den exklusiven Zugriff auf den ersten Speicher und alle weiteren Speicher bzw. Register. Der zweite Speicher-Controller regelt den Zugriff auf alle Speicher und Register außer dem ersten Speicher. Durch das Umschalten der Speicher-Controller während des Bootvorgangs können somit Zugriffe von der im zweiten Speicher ausgeführten Applikation auf sensitive Daten verhindert werden, wie zum Beispiel der Vielzahl an Verschlüsselungsschlüsseln, um verschlüsselte Daten zu entschlüsseln, die in einem externen nichtflüchtigen Speicher gespeichert sind. Unter Verwendung eines Verschlüsselungsschlüssels aus dem ersten Speicher, welcher dem Verschlüsselungsschlüsselsetzwert aus der Vielzahl von Verschlüsselungsschlüsseln entspricht, werden Daten aus einem externen nichtflüchtigen Speicher geladen, entschlüsselt und die entschlüsselten Daten im zweiten Speicher gespeichert und ein Bootvorgang unter Verwendung von in dem zweiten Speicher gespeicherten Daten durchgeführt. Die Daten können in verschiedenen Verfahren verschlüsselt werden. Zum Beispiel kann ein Datenverschlüsselungsstandard (DES) -Verfahren (symmetrischen Schlüssel-Verschlüsselungsalgorithmus mit einem Schlüssel von 56 Bits), ein Triple-DES (TDES) -Verfahren (dreimalige Wiederholung), ein Advanced Encryption Standard (AES) -Verfahren, ein SEED-Algorithmus (Verschlüsselungsalgorithmus, welcher mit einer Blockverschlüsselung arbeitet, wobei die Blockgröße und die Schlüssellänge 128 Bit betragen), ein Rivest Shamir Adleman (RSA) -Verfahren oder ein ARIA -Algorithmus (Blockverschlüsselungsmethode, welche eine Substitution-Permutation Netzwerk -Struktur auf Basis von AES verwendet, wobei die Schnittstelle die gleiche wie bei AES ist: 128-Bit- Blockgröße mit Schlüssellänge von 128, 192 oder 256 Bit) verwendet werden. Die Daten, insbesondere Informationen über einen Bootloader, im ersten Speicher werden vom Hersteller vorab eingespeichert und können vom Benutzer nicht modifiziert werden. Der Bootloader ist ein Programm, das im Voraus ausgeführt wird, bevor ein Betriebssystem gestartet wird, nämlich alle (erforderlichen) Operationen vor dem Start eines Kernels zu beenden. Das heißt, das Betriebssystem ist in einem Kernel unterteilt, in welchem Echtzeit-Befehle ausgeführt werden. Weiterhin ist ein Framework vorgesehen, der in einem Programm zum Kernel enthaltene Befehle überträgt, und eine Benutzerschnittstelle vorgesehen, welche vom Kern und dem Framework gesteuert wird. Der Bootloader bezieht sich auf ein Programm, welches die Hardware vorbereitet und den Kernel startet. Insbesondere können auch private Bootloader-Informationen im ersten Speicher gespeichert werden. Die privaten Bootloader-Informationen können Informationen enthalten, die für die Initialisierung des Systems erforderlich sind. Der Bootloader kann in einen ersten und zweiten Bootloader aufgeteilt werden, wenn nicht ausreichend Speicherplatz im zweiten Speicher zur Verfügung steht. Das System on Chip lädt die in dem externen Speicher darin im verschlüsselten Zustand gespeicherten Daten, entschlüsselt die Daten und führt eine Bootvorgang durch. Dementsprechend wird, selbst wenn eine nicht autorisierte Person die zwischen dem externen Speicher und dem System-on-Chip ausgetauschten Daten hackt, der Boot-Vorgang nicht verändert und die Boot-Sicherheit verbessert werden. Zum Beispiel kann das System on Chip in einem Bilderzeugungsgerät, wie einem Drucker, in einem Multifunktionsperipheriegerät, einem Faxgerät oder einem Scanner verwendet werden. Das aus der EP 2 741 228 A2 bekannte System-on-Chip (SoC, Ein-Chip-System) beschreibt einen hardwareunterstützten einstufigen Bootprozess, welcher einerseits die Vertraulichkeit des Schlüsselmaterials, die ausgeführte Software und Konfiguration im ersten Speicher sicherstellt und andererseits mit diesen Informationen eine weitere Software-Stufe aus einem Permanentspeicher lädt, authentifiziert, entschlüsselt und ausführt. Beim Bootprozess werden Schlüssel im Klartext verwendet, was nicht zu einem Kompromittieren des Schlüsselmaterials führt, aber entsprechende Vorkehrungen (Umschalten des Adressraums) im Speichercontroller voraussetzt, um die Vertraulichkeit des Schlüsselmaterials zu gewährleisten. Die ausgeführte Software im zweiten Speicher (OS + Applikationen) verwendet weder kryptografische Verfahren noch hält sie Schlüsselmaterial im Klartext vor, da nicht für die Vertraulichkeit durch Zugriffe Dritter über die verfügbaren Schnittstellen des ASICs garantiert werden kann. Der verschlüsselt und authentifiziert gespeicherte Authentifizierungscode entspricht einer HMAC oder ECDSA Prüfsumme, welche mittels einer kryptografischen Hashfunktion (Beispiel: SHA-1, SHA-512, ...), einem kryptografischen Verfahren (Beispiel: AES, ECC, ...) und einem Schlüssel generiert wird, um damit große Mengen an Daten durch eine kurze Prüfsumme vor Veränderungen und Manipulationen zu sichern. Beim aus der EP 2 741 228 A2 bekannte System-on-Chip wird diese Prüfsumme für das Software-Image berechnet, welches in den zweiten Speicher geladen wird. Dabei wird auf einen Schlüssel im Klartext im ersten Speicher zurückgegriffen, da sowohl für die Generierung als auch Verifikation einer solchen Prüfsumme / Signatur ein entsprechender Schlüssel notwendig ist. Authentifiziert-Verschlüsselte Schlüssel-Pakete benötigen nämlich einen Schlüssel im Klartext, um eine Authentifizierung und Entschlüsselung des Schlüsselpaketes durchzuführen. Beim Hochlaufen des Systems wird durch eine entsprechende Hardwareschaltung die Kommunikation mit der kompletten Außenwelt unterbunden und erst wieder aktiviert, wenn eine entsprechende Software in den zweiten Speicher geladen, authentifiziert, entschlüsselt und gestartet wurde. Zugleich wird jedoch der Zugriff auf den ersten Speicher unterbunden, welcher die notwendigen Schlüssel für die authentifiziert-verschlüsselten Schlüsselpakete enthält. Der einstufige hardwareunterstützte sichere Bootprozess wird ohne Zuhilfenahme eines Sicherheitsmoduls durchgeführt, wobei das Fehlen eines Sicherheitsmoduls ggf. zu einem Kompromittieren von statischem Schlüsselmaterial führt und deshalb nur kurzlebige Sitzungsschlüssel in der Applikation Anwendung finden.

Auch ist aus der US 2015/012737 A1 ein Verfahren zum sicheren Booten von ungesicherten Prozessoren in einem Zielsystem, beruhend auf einer sicheren Wurzel des Vertrauens (secure root of trust) bekannt, bei dem mittels des Bootcodes ein Nachrichtenauthentifizierungscode (message authentication code) erzeugt wird, der dem Zielprozessor zugeführt wird. Dabei wird der anfängliche Boot-Code in einem sichereren Chip, wie beispielsweise einem sicheren SoC FPGA gespeichert, welcher die Grundlage für die Wurzel des Vertrauens ist. Der Sicherheitschip sendet den Zielprozessor eine unvorhersehbare Nonce (eine Zahl oder Zeichenfolge, die nur einmal zur Authentifizierung verwendet wird), wodurch sichergestellt ist, dass die richtige Antwort auf jeden Boot-Versuch anders ist, so dass ein einfacher Replay-Angriff verhindert wird, bei dem der Angreifer die richtige Antwort von einem erfolgreichen Boot aufnehmen würde. Der sichere SoC FPGA ist für teure eingebettete Systeme vorgesehen. Die Sicherheit des in der US 2015/012737 A1 beschriebenen Systems hängt von der Effektivität der Verwürfelung (obfuscation) des initialen Code-Images ab und da sowohl der angewandte Algorithmus (AES-CBC), als auch der symmetrische Schlüssel, als auch das Ergebnis im Code mehr oder weniger nachvollziehbar sind, ist es um ein Vielfaches einfacher den Bootvorgang zu stören oder auch zu kompromittieren. Bei einer Kompromittierung des "Target Processor" würde dem Angreifer das Schlüsselmaterial im Klartext zur Verfügung stehen.

Die Lösung gemäß der US 8 756 417 B1 betrifft eine Multi-Modus Trusted Computing Platform TCP, welche aufweist: ein Field Programmable Gate Array (FPGA) Gerät mit einem Typ-1-konformen Wurzel des Vertrauens ROT, einen Speicher mit einem Typ-1-Sicherheits-Boot-Image und zumindest ein niedrigeres Sicherheits-Boot-Image und einen Speicher mit einem Typ-1-assoziierten Betriebssystem-Image OS und zumindest ein zugehöriges niedrigeres Sicherheits-Betriebssystem-Image OS. Die Multi-Modus Trusted Computing Platform TCP ist konfiguriert, um einen mehrstufigen Startprozess auszuführen, der in Abhängigkeit von der Anwesenheit von einem oder mehreren gültigen externen Eingänge einen Typ-1-TCP Rechenmodus oder einen unteren Sicherheitsrechenmodus auswählt und einleitet. Eine Typ-1-Plattform ist in der Regel eine dedizierte Computing-Plattform, die ein Höchstmaß an Sicherheit und Sicherheit zu schaffen erstellt wird und nur genau die beabsichtigte Funktionalität liefert. Die Multi-Level-Assurance Trusted Computing Platform (MLA TCP) ist eine einzige Computerplattform, die in einem typischen Hochsicherheits Modus gemäß Typ-1-Standard gebootet werden oder alternativ in einem niedrigeren Sicherheitsmodus gestartet werden kann. Die benötigten Funktionen um den kompletten Datenfluss zu verstehen, Manipulationen zu erkennen und anschließend zu intervenieren, würden bei der Lösung gemäß der US 8 756 417 B1 eine Duplizierung des eigentlichen Systems erfordern und die daraus resultierende Komplexität ist kaum mehr verifizierbar. Weiterhin ist die Lösung gemäß der US 8 756 417 B1 als Überwachungslösung für Prozessoren / Produkte ausgelegt und kann zusätzlich als Beschleuniger verwendet werden, was eine Integration bereits beim Produktentwurf voraussetzt.

Weiterhin ist aus der EP 2 635 991 A1 ein mehrstufiger Bootprozess bekannt, bei dem die nachfolgende Stufe durch eine vorhergehende Stufe entweder durch eine Signatur oder Prüfsumme verifiziert wird, bei Fehlschlagen eine Reparatur durch eine dritte Partei versucht wird und ansonsten den Austausch durch einen Service-Techniker erfordert. Dabei sind die kryptografischen Funktionen und Schlüssel durch entsprechende Hardwaremaßnahmen gesichert. Jedoch beschränkt sich die beschriebene Lösung auf Code und Daten eines oder mehrerer Kompilate einer Entität.

Schließlich ist aus der US 2009/193211 A1 ein zweistufiger Bootprozess bekannt, welcher eine Hashtabelle mit einem Signatur-Algorithmus verifiziert und anschließend Datenbereiche mit den Hashwerten aus der Hash-Tabelle partiell vergleicht.

Vom Stand der Technik her gesehen sind verschiedene Verfahren und Anordnungen zur Verbesserung der Sicherheit von verschlüsselten Computerdaten bekannt. Eine Festplattenverschlüsselung kann für die gesamte Festplatte oder einzelne Partitionen durchgeführt werden, wobei die zum Booten benötigten Daten unverschlüsselt auf der Festplatte vorhanden sein müssen oder alternativ durch einen speziellen Bootmanager entschlüsselt werden. Zum Zugriff auf verschlüsselte Festplatten wird eine Authentifizierung des Nutzers vor dem Startvorgang (Pre-Boot Authentication) durchgeführt, die in der Regel mittels eines Passworts erfolgt. Alternativ oder ergänzend sind auch Hardwarekomponenten zur Identifizierung und Authentifizierung von Benutzern bekannt, beispielsweise Security-Token, biometrische Daten wie Fingerabdruck oder Ausweiskarte. Auch kann die Verschlüsselung durch TPM (Third Party Maintenance) oder Festplatten mit einem Hardware-Sicherheitsmodul und Spezial-Firmware durchgeführt werden. In der Regel ist kein autonomes Booten möglich, sondern es ist eine zweite (zum Beispiel Benutzer) oder eine dritte (zum Beispiel Zertifizierungsstelle/zentraler Server) Partei in der Integritätsüberprüfung involviert. Eine weitere Schwachstelle der Festplattenverschlüsselung ist, dass sie keinen Schutz bietet, wenn der Rechner gebootet und mit einem Netzwerk verbunden ist. Dann kann im Prinzip über das Netzwerk oder lokal am Rechner auf den Festplatteninhalt zugegriffen werden. Die angestrebte vollständige Abdeckung möglicher Verschlüsselungsaufgabe erfordert einen hohen Aufwand. Wenig Beachtung fand jedoch, dass es mit Hilfe von kryptographischen Primitiven möglich ist, die Vertraulichkeit von Software zu erhalten, welche auf einem separaten Permanentspeicher gespeichert ist. Der Permanentspeicher selbst ist für den Angreifer leicht zugänglich und besitzt keinen ausgeklügelten physikalischen Schutz. Des Weiteren soll die Integrität und Authentizität der Software, welche auf dem Haupt-CPU läuft, garantiert werden.

Der Erfindung liegt die Aufgabe zugrunde, ein Verschlüsselungssystem derart auszugestalten, dass ein autonomes Booten, bei dem die Daten und Codes verschlüsselt und durch Digitale Signaturen und/oder Message Authentication Codes (MAC) gesichert und dadurch nicht manipulierbar / ersetzbar sind, und bei dem eine flexible Schlüssel-Hierarchie erstellbar und eine Authentifizierung / Integritätsüberprüfung vom First Stage Bootloader (FSB)/BIOS bis hin zur Applikation (Chain-of-Trust) ermöglicht wird.

Diese Aufgabe wird ausgehend von einem Verschlüsselungssystem, gemäß Oberbegriff des Patentanspruchs 1, dadurch gelöst, dass zum autonomen Booten des Betriebssystems ein Sicherheitsmodul im ASIC integriert ist, bestehend aus:
- einem Symmetrischen Kryptosystem für die Verarbeitung von symmetrischen Schlüsseln,
- einem Asymmetrischen Kryptosystem (für die Verwendung von öffentlichen und privaten Schlüsseln,
- einem Modul für die Erzeugung von Kryptographischen Hashfunktionen,
- einem Modul für den sicheren Austausch von Schlüsseln mit in Hardware implementierten Schlüsselaustauschprotokollen,
- einem Schlüssel-Speicher für die sichere Verwahrung von Wurzel-Schlüsseln,
- einer Schlüssel-Verwaltung für das sichere Einbringen von authentifiziert-verschlüsselten Schlüssel-Paketen und
- einer oder mehreren Schlüssel-Hierarchien, welche auf einen oder mehreren der im Schlüssel-Speicher hinterlegten Wurzel-Schlüsseln basieren und die direkten Nachfolger mit diesem Schlüsselmaterial authentifiziert verschlüsselt sind,
dass das Sicherheits-Modul über eine Kommunikations-Schnittstelle (KS1) mit einer Zentralen Verarbeitungseinheit in Verbindung steht und dass die Zentrale Verarbeitungseinheit sowohl mit mindestens einem internen Speicher und einem externen Speicher als auch mit mindestens einem internen Permanentspeicher und einem externen Permanentspeicher in Verbindung steht, derart, dass das Betriebssystem durch einen Second Stage Bootloader, welcher im externen Permanentspeicher gespeichert ist, geladen wird, und danach das Betriebssystem die Anwendungen lädt, wobei der Second Stage Bootloader selbst entschlüsselt und durch einen First Stage

Bootloader, welcher im internen Permanentspeicher gespeichert ist, geladen ist, und entweder einen öffentlichen oder einen symmetrischen Schlüssel, um das Betriebssystem zu verifizieren, und einen symmetrischen Schlüssel, um das Betriebssystem zu entschlüsseln, benötigt und dass der Inhalt des internen Speichers und des externen Speichers durch das Sicherheits-Modul bei Lesezugriffen durch die Zentrale Verwaltungseinheit oder anderen auf dem ASIC integrierten Modulen entschlüsselt und bei Schreibzugriffen der Selbigen wieder verschlüsselt.

Schließlich wird diese Aufgabe, nach Patentanspruch 11, durch ein Verfahren für ein Verschlüsselungssystem mit einem Sicherheits-Modul nach Anspruch 1, dadurch gelöst, dass
- eine sichere Behandlung von kryptographischen Schlüsselmaterial außerhalb des Sicherheits-Moduls durch die Verwendung von authentifziert-verschlüsselter Schlüsselpakete gewährleistet ist,
- die Integrität, Authentizität und Geheimhaltung der ausgeführten Software durch die Einführung eines sicheren autonomen Boot-Prozesses mit durch in Hardware implementierter Routinen, welche die folgenden Schritte:
   1. Berechnung einer Prüfsumme für die in einem internen Permanentspeicher oder externen Permanentspeicher abgelegte Software und anschließenden Vergleich mit vorher bestimmter Prüfsumme,
   2. Falls übereinstimmende Prüfsummen wird die Software ausgeführt, ansonsten wird der Zugriff auf das Sicherheit-Modul unterbunden,
   3. Während der Ausführung werden kontinuierlich Prüfsummen der ausgeführten Software mit vorherigen Werten verglichen und bei einem Unterschied werden entsprechende Maßnahmen ergriffen,
   umfassen, gewährleistet ist,
- eine sichere Kommunikation durch die Verwendung sicherer Schlüsselaustauschprotokolle erfolgt,
- beliebig tiefe Schlüssel-Hierarchien mit Hilfe der Wurzel-Schlüssel (WS), welche in einem Schlüssel-Speicher (SS) hinterlegt und die direkten Nachfolger mit diesem Schlüsselmaterial authentifiziert verschlüsselt sind, aufgebaut werden, so dass die Implementierungen keine unnötigen Einschränkungen auf nur eine Applikation erfährt, und
- die Erweiterbarkeit der implementierten Verfahren durch die Nachrüstbarkeit von kryptographischen Verfahren in Software erfolgt, so dass eine integritätsgesicherte, authentifizierte und verschlüsselte Speicherung in nicht vertrauenswürdigen Speichern gewährleistet ist,
derart, dass das Betriebssystem durch einen Second Stage Bootloader, welcher im externen Permanentspeicher gespeichert ist, geladen wird, und danach das Betriebssystem die Anwendungen lädt, wobei der Second Stage Bootloader selbst entschlüsselt und durch einen First Stage Bootloader, welcher im internen Permanentspeicher gespeichert ist, geladen ist, und entweder einen öffentlichen oder einen symmetrischen Schlüssel, um das Betriebssystem zu verifizieren, und einen symmetrischen Schlüssel, um das Betriebssystem zu entschlüsseln, benötigt und dass der Inhalt eines internen Speichers und eines externen Speichers durch das Sicherheits-Modul bei Lesezugriffen durch eine zentrale Verwaltungseinheit oder anderen auf dem ASIC integrierten Modulen entschlüsselt und bei Schreibzugriffen der Selbigen wieder verschlüsselt..

Das erfindungsgemäße Verschlüsselungssystem/Verfahren ermöglicht ein autonomes Booten, wobei das Schlüsselmaterial nur innerhalb des Sicherheitsmoduls im Klartext vorhanden - sonst verschlüsselt ist, und eine Verschlüsselung aller Softwarepakete. Weiterhin ist eine flexible Schlüssel-Hierarchie erstellbar und es wird eine Authentifizierung / Integritätsüberprüfung vom First Stage Bootloader (FSB)/BIOS bis hin zur Applikation (Chain-of-Trust) ermöglicht. Insbesondere ist eine Integritätsüberprüfung aller Daten, eine benutzerwählbare/ feingranulare Verschlüsselung, ein Update von Schlüsselmaterial außer Wurzel-Schlüssel und ein Update des Bootloaders möglich. Durch die Bindung von Teilen der Software an den ASIC ist es schwieriger zu manipulieren und abzuhören, es kann ein implizites Deaktivieren einer Debugging-Schnittstelle durch das Sicherheitsmodul erfolgen und das Generieren von Schlüsseln mittels Zufallszahlengenerator erfolgt mit Hardware

Unterstützung (Erhöhung der Entropie durch das Ausnutzen physikalischen Effekten wie zum Beispiel Rauschen).

Bootloader spezifisch sind folgende Vorteile:
- Safety: Datenübertragungen werden durch entsprechende Protokolle von zufälligen Bit/Byte-Kippern geschützt.
- Safety: Daten und Code werden durch Error-Correcting-Codes (ECC) im Permanentspeicher geschützt.
- Safety: Lesen / Schreiben von Flash Images ist durch entsprechende Prozesse sicher gemacht worden. Beispiel anhand eines Updates: Es existieren immer zwei gültige Versionen einer Software. Bei einem Update wird eine von beiden mit einer neueren Software überschrieben und anschließend ausgeführt, um zu sehen, ob diese korrekt ausgeführt wird. Falls nicht, wird die alte Software wieder ausgeführt und das alte Image wiederhergestellt. Falls doch, wird das alte Image mit der neuen Software überschrieben. Anschließend sind beide Software-Plätze wieder auf dem gleichen Stand.
- Security: alle Daten und Code sind verschlüsselt und durch entsprechende Signaturen gesichert und dadurch nicht manipulierbar / ersetzbar etc. sowohl beim Transport als auch beim Bootstrapping, wodurch Security in allen Phasen erreicht wird.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- FIG. 1: die Struktur und die Module des erfindungsgemäßen Sicherheits-Moduls,
- FIG. 2: die Struktur des erfindungsgemäßen Verschlüsselungssystems als erste mobile Lösung,
- FIG. 3: die Struktur des erfindungsgemäßen Verschlüsselungssystems als zweite mobile Lösung,
- FIG. 4: die Struktur des erfindungsgemäßen Verschlüsselungssystems als integrierte Lösung,
- FIG. 5: ein Beispiel für eine Schlüsselhierarchie mit mehreren Applikationen und mehreren Schlüssel pro Applikation,
- FIG. 6: ein Beispiel für einen Boot Prozess,
- FIG. 7: die unterschiedlichen Schichten der Software zur Realisierung einer Chain-of-Trust für den Zugriff auf die Permanentspeicher und das Sicherheitsmodul,
- FIG. 8: eine symmetrische Schlüsselarchitektur im normalen Betrieb mit verschiedenen Schlüsseln und
- FIG. 9a, b: die Schreibgeschwindigkeit der unterschiedlichen Schichten.

Bei der erfindungsgemäßen Lösung wird von einem bestimmten Angriffsmodell ausgegangen. Nämlich, dass ein Angreifer physikalischen Zugang zum System, jedoch beschränkte Fähigkeiten bezüglich Angriffe auf die Hardware hat. Das Ziel des Angreifers könnte die Extraktion von Geheimnissen oder die Einbringung von benutzerdefiniertem Code oder Daten sein, welche im Gefüge der Originalsoftware verarbeitet werden.

Beispielsweise möchte der Angreifer die Software eines Navigationsgeräts abbilden oder entschlüsseln um ein inhaltsgleiches Produkt nach zu bauen (Reverse-Engineering), oder er möchte von Hand erzeugte Werte in einen Smart Meter einbringen, um den Zählerstand zum Ungunsten des elektrischen Energieversorgers zu drehen. Bei diesen Anwendungen nach dem Stand der Technik hat ein Angreifer physikalischen Zugriff auf einen Flash-Chip, welcher als Permanentspeicher für Code und Daten dient. Dem Angreifer ist es möglich Daten, welche auf dem Flash-Chip gespeichert sind zu lesen, und er hat des Weiteren die Möglichkeit Daten auf den Flash-Chip Flash-Page-Weise zu ändern. Der Angreifer benötigt beispielsweise nur ein kleines Budget, nämlich einen Mikrocontroller, welcher an das Flash über SPI (Serial Periphal Interface) angeschlossen werden kann, und passende Kommandos schickt. In der Regel ist das System aber nicht unbedingt in der Lage sich während der Bootphase mit einer Zweitpartei zu verbinden. Dem Angreifer ist es nicht möglich anspruchsvollere Hardware-Angriffe, wie Chip-Probing oder die Beobachtung ASICinternen Register, während der Laufzeit durchzuführen. Diese Attacken erfordern im Allgemeinen ein weitaus größeres Budget als einfache physikalische Angriffe und sind wesentlich komplexer. Weiterhin wird angenommen, dass es dem Angreifer nicht möglich ist, Abbilder des RAMs zu machen, während das System läuft. Kann angenommen werden, dass der Angreifer dennoch in der Lage ist den Speicherinhalt auszulesen, besteht die Möglichkeit den Speicherinhalt der internen und externen flüchtigen Speicher transparent zu verschlüsseln.

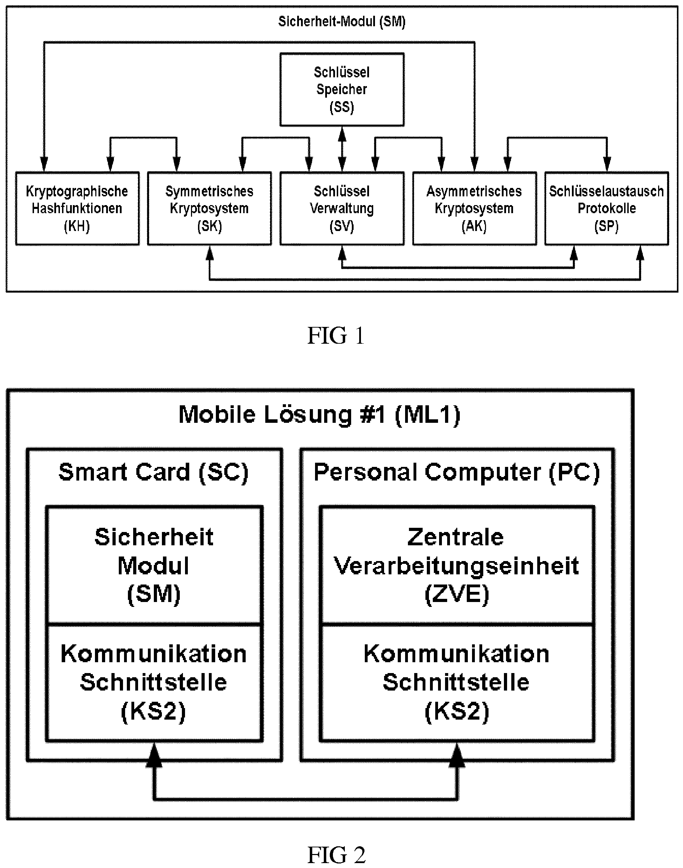

Das in FIG. 1 dargestellte Sicherheits-Modul SM ist Bestandteil des erfindungsgemäßen Systems und besteht aus nachfolgenden Modulen, die miteinander verschalten sind:
1. Symmetrisches Kryptosystem SK: Hardwarebeschleuniger für die Anwendung kryptografischer symmetrischer Verfahren zur Verschlüsselung / Entschlüsselung und Sicherstellung der Integrität bzw. der Authentizität von Daten. Die für die Operationen zu verwendenden Schlüssel werden von der zentralen Schlüssel-Verwaltung SV bereitgestellt. Beispielsweise werden nachfolgende Algorithmen implementiert, jedoch ist die Erfindung nicht limitiert auf diese:
   a. Advanced Encryption Standard (AES),
   b. Data Encryption Standard (DES),
   c. Cipher-based Message Authentication Code (CMAC),
   d. Hash-based Message Authentication Code (HMAC).
2. Asymmetrisches Kryptosystem AK: Hardwarebeschleuniger für die Anwendung kryptografischer asymmetrischer Verfahren zur Verschlüsselung / Entschlüsselung, Sicherstellung der Integrität / Authentizität und Generierung von digitalen Signaturen mittels Public-Private-Schlüsseln. Die für die Operationen zu verwendenden Schlüssel werden von der zentralen Schlüssel-Verwaltung SV bereitgestellt. Vorzugsweise werden nachfolgende Algorithmen implementiert:
   a. Elliptic Curve Cryptography (ECC, ein asymmetrisches Kryptosystem),
   b. Elgamal-Kryptosystem (ein Public-Key-Verschlüsselungsverfahren, welches auf einem Diffie-Hellman-Schlüsselaustausch beruht, d.h. auf Operationen in einer zyklischen Gruppe endlicher Ordnung),
   c. Digital Signature Algorithm (DAS, ein Algorithmus zur digitalen Signatur),
   d. Elliptic Curve Digital Signature Algorithm (ECDSA).
3. Kryptographische Hashfunktionen KH: Hardwarebeschleuniger zur Berechnung von kryptographischen Hashwerten mittels kollisionsresistenten Einwegfunktionen, deren Ergebnis als Eingabe für Symmetrische als auch Asymmetrische Kryptosysteme (SK/AK) dienen können. Ferner sind die Kryptosysteme SK und AK entsprechend ausgelegt, dass ein Einspeisen von Hashwerten, die mittels Software Hashfunktionen generiert wurden, möglich ist. Vorzugsweise werden nachfolgende Algorithmen in Hardware implementiert:
   a. SHA-2 / SHA-3 (224 / 256 / 384 / 512 Bit),
   b. BLAKE,
   c. SMASH.
4. Schlüsselaustausch-Protokolle SP: Hardware-Modul für den sicheren Austausch von kryptographischem Schlüsselmaterial über potentiell unsichere Kanäle. Dabei werden sowohl symmetrische als auch asymmetrische Austauschverfahren unterstützt, wie nachfolgende beispielhafte Auflistung der implementierten Verfahren zeigt:
   a. Diffie-Hellman-Schlüsselaustausch (DH),
   b. Elliptic-Curve-Diffie-Hellman-Schlüsselaustausch (ECDH),
   c. Needham-Schroeder-Protokoll.
5. Schlüsselspeicher SS: Sicherer Permanentspeicher zur Speicherung von einem oder mehreren Wurzel-Schlüsseln für die Verwendung in den enthaltenen Modulen des Sicherheits-Moduls SM zur Entschlüsselung, Authentifizierung und Integritätsüberprüfung von verschlüsselt und / oder authentifizierten Daten bzw. Generierung von Digitalen Signaturen, Message Authentication Codes und Verschlüsselung von Klartext-Daten.
6. Schlüsselverwaltung SV: Hardware-Modul zum sicheren Einbringen von authentifiziert-verschlüsseltem Schlüsselmaterial (Authenticated Encryption / Authenticated Encryption with Associated Data) für die Verwendung in den angeschlossenen Hardware-Modulen des Sicherheits-Moduls SM, d.h. authentifiziert-verschlüsseltes Schlüsselmaterial kann in unsicheren externen Datenspeichern gelagert werden und vor der Verwendung mittels der Schlüsselverwaltung SV entschlüsselt und authentisiert werden, so dass das enthaltene kryptographische Material im Klartext den anderen Modulen des Sicherheits-Moduls SM zur Verfügung gestellt werden kann. Das so erhaltene Schlüsselmaterial im Klartext ist nur zugänglich innerhalb des Sicherheits-Moduls SM und ist durch entsprechende Hardware-Maßnahmen und Schnittstellen entsprechend geschützt, dass das auch so bleibt. Dabei werden beispielsweise folgende authentifiziert-verschlüsselnde Verfahren unterstützt:
   a. AES Key Wrap,
   b. Galois / Counter Mode (GCM),
   c. Encrypt-then-Authenticate-then-Translate (EAX).

Die Funktionalität und Verbindung der in FIG. 1 dargestellten Module ist wie folgt:
Der Schlüsselspeicher SS ist ein durch Hardwaremaßnahmen geschützter Speicher für symmetrische als auch asymmetrische (Wurzel-)Schlüssel im Klartext.

Die Schlüsselverwaltung SV ist:
a.) Zentrale Komponente des Sicherheit-Modul SM.
b.) Einzige Komponente mit Zugriff auf den geschützten Schlüsselspeicher SS.
c.) Verantwortlich für die Verarbeitung von authentifiziert-verschlüsselter Schlüssel-Pakete.
d.) Verantwortlich für das interne Verteilen von Schlüsseln im Klartext an das Symmetrische Kryptosystem SK und an das Asymmetrische Kryptosystem AK.
e.) Verantwortlich für das Erstellen von authentifiziert-verschlüsselten Sitzungs-Schlüsseln aus dem Schlüsselaustausch-Protokoll Modul SP.

Das Symmetrische Kryptosystem SK ermöglicht:
a.) Verbindung mit der Schlüsselverwaltung als Quelle für Schlüssel im Klartext.
b.) Verbindung mit dem Modul für Kryptographische Hashfunktionen KH um kryptografische Signaturen (Beispiel: CMAC, HMAC, ...) zu berechnen.
c.) Verbindung mit dem Modul für Schlüsselaustausch-Protokolle SP um Protokolle basierend auf symmetrischen Verfahren zu unterstützen.

Das Asymmetrische Kryptosystem AK ermöglicht:
a.) Verbindung mit der Schlüsselverwaltung SV als Quelle für Schlüssel im Klartext.
b.) Verbindung mit dem Modul für Kryptographische Hashfunktionen KH um kryptografische Signaturen (Beispiel: DSA, ECDSA, ...) zu berechnen.
c.) Verbindung mit dem Modul für Schlüsselaustausch-Protokolle SP um Protokolle basierend auf asymmetrischen Verfahren zu unterstützen.

Die Schlüsselaustausch-Protokolle SP ermöglichen:
a.) Verbindung mit den Modulen Symmetrisches Kryptosystem SK und Asymmetrisches Kryptosystem AK um kryptografische Algorithmen zu implementieren.
b.) Verbindung mit der Schlüsselverwaltung SV als Senke für ausgehandelte Sitzungsschlüssel um authentifiziert-verschlüsselte Schlüsselpakete zu generieren.

Schließlich ermöglichen die Kryptographischen Hashfunktionen KH:
a.) Verbindung mit dem Modul Symmetrisches Kryptosystem SK um symmetrische Algorithmen zu implementieren.
b.) Verbindung mit dem Modul Asymmetrisches Kryptosystem AK um asymmetrische Algorithmen zu implementieren.

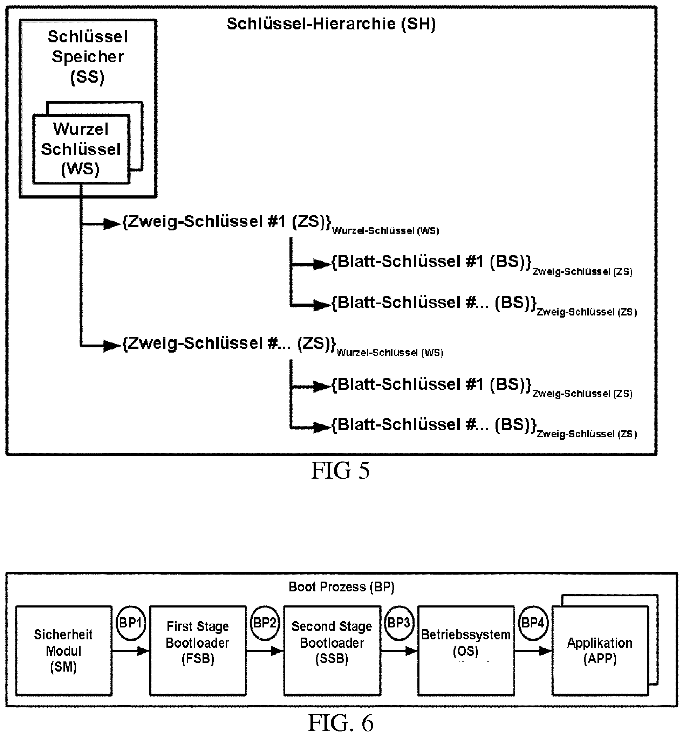

Die in FIG. 5 dargestellte Schlüssel-Hierarchie SH ist eine mögliche logische Repräsentation von Schlüsselmaterialien, die für den Betrieb des erfindungsgemäßen Systems verwendet werden kann. Dabei bilden eine oder mehrere Wurzel-Schlüssel WS die Basis für eine oder mehrere Schlüssel- Hierarchien. Die Wurzel-Schlüssel WS sind im Klartext in den internen Permanentspeichern des Sicherheits-Moduls SM abgelegt. Durch Hardwaremaßnahmen wird ein Auslesen des Schlüsselmaterials verhindert, wie zum Beispiel, dass kein direkter Zugriff über die Zentrale Verwaltungseinheit ZVE möglich ist oder dass ein direktes Auslesen der Permanentspeicher mittels Tastköpfen auf dem "Die" (d.h. logische Strukturen des ASIC's) des Chips erschwert bzw. verhindert wird. Ferner kann die Schlüssel-Hierarchie SH aufgrund der nahezu unbeschränkt verfügbaren Ressourcen des erfindungsgemäßen Systems beliebig viele Zweig-Schlüssel ZS und beliebig viele Blatt-Schlüssel BS enthalten.

Zweig-Schlüssel ZS stellen eine logische Indirektion zwischen Wurzel-Schlüssel WS bzw. anderen Zweig-Schlüssel ZS dar und können zur einfachen Separierung von kryptographischen Schlüsselmaterial verwendet werden, indem das operative Schlüsselmaterial verschiedener Entitäten unterhalb verschiedener Zweig-Schlüssel ZS eingehängt werden und somit eine kryptographische Separierung zwischen den Entitäten stattfindet.

Blatt-Schlüssel BS stellen das operative Schlüsselmaterial, das für die Operationen innerhalb des Sicherheits-Moduls SM verwendet wird, dar. Diese können sowohl direkt über einen Wurzel-Schlüssel WS oder indirekt über Zweig-Schlüssel ZS der Schlüssel-Hierarchie SH hinzugefügt werden.

Alle Schlüssel mit Ausnahme der Wurzelschlüssel WS sind mit Hilfe, der in der Schlüssel-Verwaltung SV beschriebenen Verfahren durch ihre Vorgänger (Pfeil in umgekehrter Richtung folgen) in der Schlüssel-Hierarchie SH authentifiziertverschlüsselt worden. Dabei muss das entsprechende Schlüsselmaterial mit einem für die Schlüssel-Verwaltung SV vorbereiteten Paket umhüllt werden. Diese Umhüllung ist mit geschweiften Klammern {} in der Schlüssel-Hierarchie SH der FIG. 5 angezeigt. Zudem wird die umhüllende authentifizierte Verschlüsselung des Pakets durch die tiefgestellte Bezeichnung des Vorgänger-Schlüssels, welche der geschweiften Klammer direkt folgt, verdeutlicht.

Mit dieser Methode lassen sich sowohl statisch als auch dynamisch beliebig flache/tiefe Schlüssel-Hierarchien SH erzeugen, d.h. einer direkten Verwendung der Wurzel-Schlüssel WS als auch einer Verwendung von Blatt-Schlüsseln BS in beliebiger Tiefe der Schlüssel-Hierarchien SH steht beim erfindungsgemäßen System nichts im Wege.

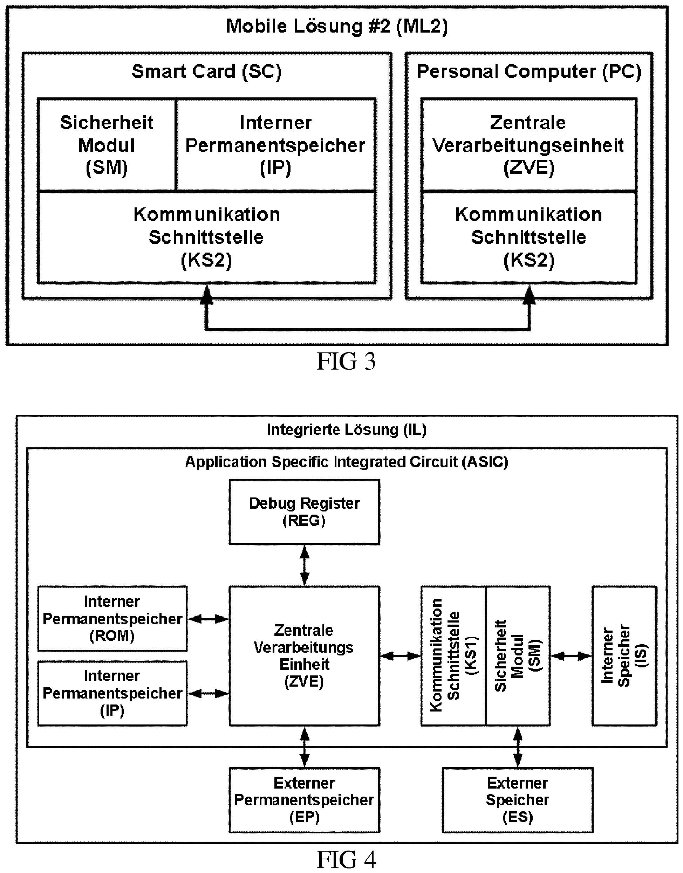

Das erfindungsgemäße System kann im Rahmen der Erfindung ausgestaltet werden, insbesondere als eine Integrierte Lösung IL, welche in FIG. 4 dargestellt ist, als eine erste Mobile Lösung ML1, welche in FIG. 2 abgebildet ist und als eine zweite Mobile Lösung ML2, welche in FIG. 3 dargestellt ist.

Bei der Integrierten Lösung IL wird das Sicherheits-Modul SM als Modul in einem Application-Specific-Integrated-Circuit (ASIC) auf einem "Die" integriert und mit allen anderen Modulen des ASICs, soweit notwendig, verbunden. Das Sicherheits-Modul SM ist dabei über eine für den Gebrauch in einem ASIC vorgesehene Kommunikations-Schnittstelle KS1, vorzugsweise einen Prozessorbus wie dem Advanced Microcontroller Bus Architecture (kurz AMBA) eingebunden.

Ferner überprüft das Sicherheits-Modul SM die Integrität und Authentizität der im internen Permanentspeicher IP hinterlegten Software während des Boot-Prozesses (BP, siehe Schritt BP1) und stellt somit sicher, dass keine Manipulationen durch etwaige Angreifer erfolgen.

Zudem wird der Inhalt des internen Speichers IS und des externen Speichers ES durch das Sicherheits-Modul SM bei Lesezugriffen durch die Zentrale Verwaltungseinheit ZVE oder anderen auf dem ASIC integrierten Modulen entschlüsselt und bei Schreibzugriffen der Selbigen wieder verschlüsselt. Dies soll ein direktes Auslesen der Daten mittels Tastköpfen und somit ein Reverse-Engineering der Daten und des Codes erschweren bzw. unmöglich machen.

Der interne Permanentspeicher IP, welcher vorzugsweise als nicht veränderlicher Permanentspeicher (wie zum Beispiel einem Read-Only-Memory (ROM)) ausgebildet ist, enthält während des Boot-Prozesses vorzugsweise den First Stage Bootloader FSB (siehe FIG. 6), der für die Initialisierung der Hardware, das Laden, die Verifikation und das Entschlüsseln der nächsten Stufe des Boot-Prozesses BP verantwortlich ist, welche vorzugsweise als Software in Form eines Second Stage Bootloaders SSB (siehe FIG. 6), der entweder in internen oder externen Permanentspeicher (IP/EP) in authentifizierter und verschlüsselter Form hinterlegt ist, ausgebildet ist.

Die wesentlich größeren externen Permanentspeicher EP enthalten vorzugsweise den Code und die Daten für den Second Stage Bootloader SSB, das Betriebssystem OS und einer oder mehreren Applikationen APP in authentifizierter und verschlüsselter Form. Jedoch steht einer Integration der vorgenannten Software in einem weiteren internen Permanentspeicher IP nichts im Wege. Sowohl interner Permanentspeicher IP als auch externer Permanentspeicher EP sollten in diesem Falle als veränderlicher Permanentspeicher ausgebildet sein, zum Beispiel in Form eines Flash oder eines EEPROM, damit Änderungen möglich sind und keine Flexibilität bezüglich der Einsatzgebiete verloren werden.

Sowohl interner Speicher IS als auch externer Speicher ES sind für die Speicherung von Code und /oder Daten der ausgeführten Software verantwortlich. Unabhängig von der Position der Speicher IS/ES wird der Inhalt beider Speichertypen mit Hilfe des Sicherheits-Moduls SM je nach Bedarf verschlüsselt und entschlüsselt. Diese beiden Speicher IS/ES sind vorzugsweise als SRAM oder DRAM ausgebildet.

Die Zentrale Verwaltungseinheit ZVE ist für die Ausführung der Software (FSB/SSB /OS/APPs) verantwortlich und ist vorzugsweise in Form eines Prozessors, ähnlich einem ARM Cortex oder MIPS, ausgestaltet.

Im Einzelnen ist die Funktionalität und Verbindung der in FIG. 4 dargestellten integrierten Lösung IL wie folgt:
Zentrale Verarbeitungs-Einheit (ZVE):
Die Zentrale Verarbeitungs-Einheit ZVE ist verantwortlich für das Ausführen von Instruktionen, zum Prozessieren von Daten und Abarbeiten von Algorithmen.

Debug Register (REG):
Der Registerinhalt des Debug Registers REG wirkt auf zwei Funktionalitäten. Die erste Funktionalität (DEBUG) ist das An- und Abschalten der Debug-Schnittstelle (Beispiel: JTAG), um externe Einflüsse durch einen Debugger während des Bootvorgangs zu erlauben oder zu unterbinden. Die zweite Funktionalität (LOCK) aktiviert oder deaktiviert die Möglichkeit des An- oder Abschaltens der ersten Funktionalität, d.h. wenn LOCK zum Beispiel auf '0' gesetzt wurde, werden alle weiteren Änderungsversuche an DEBUG unterbunden, wohingegen bei LOCK == '1', der Zustand von DEBUG frei setzbar ist. Der Zustand von LOCK kann nur einmalig während des Bootprozesses beeinflusst werden, d.h. von logisch '1' auf logisch '0'. Alle weiteren Versuche schlagen fehl, da eine Umkehrung nicht möglich ist.

Kommunikations Schnittstelle KS1:
Das Sicherheits-Modul SM wird über die Kommunikations-Schnittstelle KS1 an die Zentrale Verarbeitungs-Einheit ZVE angebunden, vorzugsweise mittels Prozessorbus beispielsweise mit dem Advanced Microcontroller Bus Architecture (AMBA).

Interner Speicher IS und Externer Speicher ES:
Sowohl der Interne Speicher IS als auch der Externe Speicher ES dienen zum Ausführen von Code, beispielsweise dem Second Stage Bootloader SSB, dem Betriebssystem OS, den Applikationen APP oder der Speicherung von Daten im Allgemeinen. Der komplette Dateninhalt des Speichers wird dabei durch das Sicherheits-Modul SM transparent verschlüsselt um etwaige Cold Boot Attacken (Auslesen des Speichers) zu verhindern. Der Zentralen Verarbeitungs-Einheit ZVE werden der Code und die Daten im Klartext zur Verfügung gestellt.

Interner Permanentspeicher ROM:
Dieser Speicher ist vorzugsweise als Read-Only-Memory ausgestaltet und enthält vorzugsweise den NICHT verschlüsselten First Stage Bootloader FSB. Der First Stage Bootloader FSB ist zuständig für das Laden weiterer Software, beispielsweise einem Second Stage Bootloader SSB, einem Betriebssystem OS oder einer Applikation APP über diverse interne und externe Schnittstellen / Komponenten wie zum Beispiel dem Internen / Externen Permanentspeicher IP / EP oder weiterer nicht näher spezifizierter und ansich bekannter Kommunikationsschnittstellen (Beispiel: UART, SPI, I2C, MII etc.), welche die Zentrale Verarbeitungs-Einheit ZVE mit anderen Geräten oder Prozessoren verbindet. Die Auswahl der jeweiligen Boot-Variante findet dabei entweder über das Anlegen entsprechender Spannungen an bestimmten Eingangspins des ASICs statt oder kann mittels Konfiguration in einem der angeschlossenen Permanentspeicher bestimmt werden. Im Falle eines sicheren Bootvorgangs authentifiziert und entschlüsselt der First Stage Bootloader FSB zudem die nächste Software-Stufe im Bootprozess und führt diese bei Erfolg aus. Ein Scheitern der Verifikation führt zu einem Stilllegen der Zentralen Verarbeitungs-Einheit (ZVE).

Interner Permanentspeicher IP und Externer Permanentspeicher EP:
Beide Permanentspeicher IP und EP dienen im Falle eines sicheren Bootvorgangs der Speicherung von authentifiziert-verschlüsselter Software, Schlüsselpakete und applikationsbezogener Konfiguration und Daten. Im Falle eines NICHT sicheren Bootvorgangs werden die Daten im Klartext in mindestens einer dieser Permanentspeicher hinterlegt.

Der erfindungsgemäße Bootprozesserfolgt wie nachstehend kurz beschrieben:
a.) Nachdem die Betriebsspannungen ihren gewünschten Wert erreicht haben wird das Reset Signal zurückgesetzt, d.h. der ASIC bzw. die Zentrale Verarbeitungs-Einheit ZVE nimmt ihren Betrieb auf.
b.) Initial ist die Debug-Schnittstelle deaktiviert (DEBUG = '0'), der Verriegelungsmechanismus offen (LOCK = '1') und die im Internen Permanentspeicher (ROM) befindliche Software wird ausgeführt.
c.) Feststellen der Boot-Variante (sicher / unsicher und über welche Schnittstelle) durch Auswerten der Eingangspotentiale an den Boot-Pins und der Konfiguration in den Permanentspeichern IP und EP.
d.) Laden der nächsten Software-Stufe von Internem Permanentspeicher IP, Externem Permanentspeicher EP oder externer Kommunikationsschnittstelle in den Internen Speicher IS oder Externen Speicher ES.
e.) In-situ Authentifizierung (optional), Entschlüsselung (optional) und Ausführen der geladenen Software.
f.) Im Falle eines sicheren Boot-Vorgangs wird das Debug Register (REG) in nachfolgenden Zustand versetzt: DEBUG = 0 und LOCK = 0 (Debug nicht möglich und keine weiteren Änderungen erlaubt), sonst DEBUG = 1 und LOCK = 1 (Debug möglich und weitere Änderungen erlaubt).
g.) Die Schritte d.) und e.) werden für jede weitere Stufe des Bootprozesses wiederholt.

Wie in FIG. 2 dargestellt ist, kann alternativ das Sicherheits-Modul SM in Form einer Smart Card SC oder eines USB-Sticks, insbesondere als mobile Lösung ML 1 ausgebildet werden.

Bei dieser ersten mobilen Lösung ML1 wird die Kommunikations-Verbindung zwischen dem Sicherheits-Modul SM auf der Smart Card SC und der Zentralen Verarbeitungseinheit ZVE des Personal Computer PC über eine lösbare und in der Informationstechnik gebräuchliche Kommunikations-Schnittstelle KS2 hergestellt, welche vorzugsweise als Smartcard-Reader oder USB-Schnittstelle ausgebildet ist.

In dieser Variante ist es nicht möglich, den Speicherinhalt des Personal Computer PC zu verschlüsseln, da keine direkte Kontrolle auf den Datenfluss über die zentrale Verwaltungseinheit ZVE besteht. Die Smartcard SC wird der zentralen Verwaltungseinheit ZVE als sicheren Coprozessor für kryptographische Aufgaben bereitgestellt, so dass kryptographisches Material nicht im Klartext auf den angeschlossen Speichermedien des Personal Computer PC gespeichert werden muss, sondern nur in Form authentifizierter und verschlüsselter Pakete, welche nur mit der entsprechend angeschlossenen Smartcard SC mit integriertem Sicherheits-Modul SM verwendbar sind.

Mit dieser Methode kann gewährleistet werden, dass verschlüsselte Speichermedien (siehe Festplattenvollverschlüsselung) durch Belauschen der Kommunikation-Schnittstelle KS2 zwischen Smartcard SC und einem Personal Computer PC einem Angreifer sowohl Schlüsselmaterial im Klartext als auch die verschlüsselten Daten, die er ohne Wissen des Benutzers sich beschaffen hätte können zur Verfügung stehen. Dies führt zu einer Bindung des kryptographischen Materials an die jeweilige Smartcard SC, welche ein Benutzer (ähnlich wie einen Haustürschlüssel) stets bei sich trägt und welches somit sicher vor etwaigen Angreifern ist. Die verschlüsselten Speichermedien haben somit keinen Wert für den Angreifer, da sie ohne die entsprechende Smartcard SC für ihn nicht lesbar sind.

Bei der zweiten in FIG. 3 dargestellten Mobilen Lösung ML2 erfolgt die Einbindung des Sicherheit-Modul SM und des im Internen Permanentspeicher IP gespeicherten Bootloader in den sicheren Bootprozess des Personal Computers. Der Interne Permanentspeicher IP wird dabei der UEFI Firmware als bootbares Medium zur Verfügung gestellt. Die enthaltene Software wird mittels Signatur-Verifikation mit dem im Personal Computer integrierten TPM-Modul verifiziert. Anschließend kann der erfindungsgemäße Bootprozess durchgeführt werden.

Für alle Ausgestaltungen des erfindungsgemäßen Systems ist es möglich den in FIG. 6 dargestellten exemplarischen Boot-Prozess BP vollumfänglich bzw. größtenteils zu unterstützen.

Bei der integrierten Lösung IL kann das Sicherheits-Modul SM die Integrität und Authentizität der initial ausgeführte Software-Komponente durch in Hardware implementierte Routinen sicherstellen. Diese Routinen sind als BP1 im Boot-Prozess BP beschrieben und umfassen folgende Schritte:
1. Berechnung einer Prüfsumme für die im internen/externen Permanentspeicher IS/ES abgelegte Software und anschließender Vergleich mit vorher bestimmter Prüfsumme.
2. Falls OK, d.h. übereinstimmende Prüfsummen soll die Software ausgeführt werden, ansonsten soll durch entsprechende Maßnahmen der Zugriff auf das Sicherheit-Modul SM unterbunden werden.
3. Während der Ausführung sollen kontinuierlich Prüfsummen der ausgeführten Software mit vorherigen Werten verglichen werden und bei einem Unterschied wiederum entsprechende Maßnahmen ergriffen werden.

Die nachfolgenden Schritte im Boot-Prozess BP (gekennzeichnet durch BP2, BP3 und eine oder mehrere BP4-Prozesse) sind kurz skizziert:
1. Laden der Software des Nachfolgers (zum Beispiel FSB lädt SSB und SSB lädt OS etc.) in den internen/externen Speicher IS/ES.
2. Verifikation bzw. Integritätsüberprüfung anhand angewandter kryptographischer Verfahren wie zum Beispiel Digitaler Signaturen oder Message Authentication Codes mittels A-/Symmetrisches Kryptosystem (AK/SK).
3. Bei korrekter Überprüfung folgt die Entschlüsselung mit entsprechendem kryptographischen Verfahren mittels Asymmetrisches Kryptosystem (AK/SK).
4. Ausführen der entschlüsselten Software.

Das erfindungsgemäße autonom bootende System baut auf einen handelsüblichen ASIC und einen Echtzeitbetriebssystems auf. Die meisten Algorithmen sind in Hardware implementiert und werden von einem geeigneten Treiber angetrieben, manche jedoch sind auch reine Softwareimplementierungen.

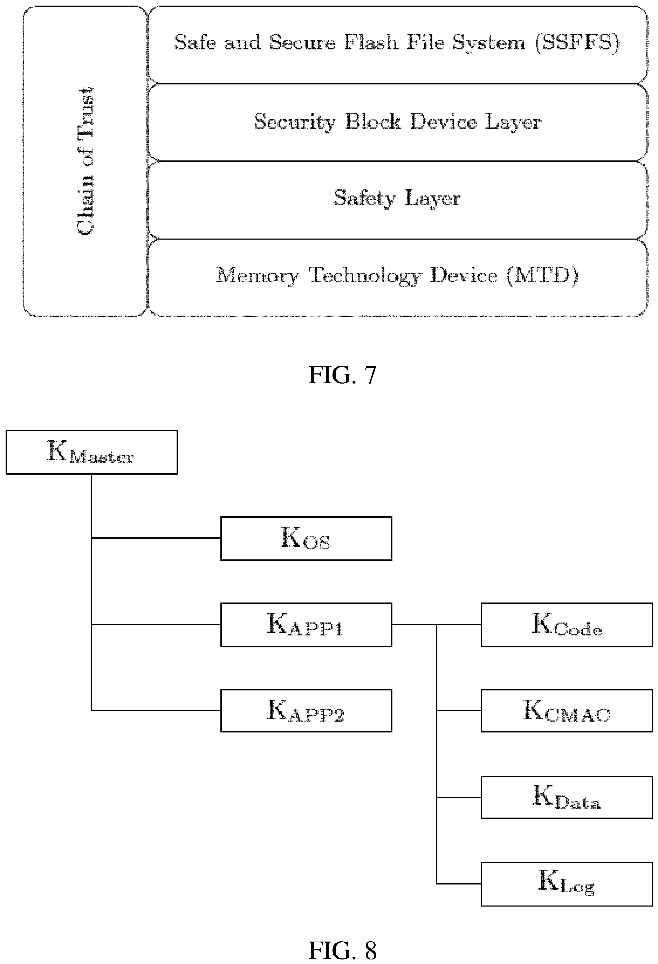

Das System kann in zwei Hauptbestandteile aufgeteilt werden, namentlich die Implementierung eines hierarchischen Schlüsselbaums und die verschiedenen Schichten zum Zugriff auf den internen oder externen Permanentspeicher IP / EP, vorzugsweise als Flash-Chip ausgebildet. Nachfolgend ein kurzer Überblick wie alle Komponenten des erfindungsgemäßen autonom bootende Systems zusammenarbeiten. FIG. 7 zeigt die unterschiedlichen Software-Schichten für den Zugriff auf den Flash-Chip.

Am unteren Ende ist der Memory Technology Device (MTD) Treiber für die Kommunikation mit der Hardware verantwortlich.

Abhängig vom Flash-Chip muss der Treiber über SPI-Bus (Serial Peripheral Interface) oder über eine parallele Verbindung kommunizieren.

Oben auf der MTD-Schicht kümmert sich die Safetyschicht um die Fehlerkorrektur.

Code für Anwendungen ist mit Hilfe der Safetyschicht auf dem Flash-Chip gespeichert, sowie direkt und als Ganzes verschlüsselt, da die Securityschicht Verschlüsselung nur auf einer Sektor-weisen Basis erlaubt.

Die Securityschicht ist obenauf der Safetyschicht erstellt, und wird von den oberen Schichten nur als gewöhnliches Block-Device gesehen. Sie stellt Verschlüsselung und Integritätsprüfung transparent auf einer Sektor-weisen Basis zur Verfügung. Log-Dateien werden zum Beispiel durch die Securityschicht geschrieben, weil sie zyklisch geschrieben werden können und da es erlaubt ist, alte Daten zu überschreiben. Somit kann der Overhead eines Dateisystems für Log-Dateien gespart werden, was sehr Platz-effizient ist.

Oben auf der Securityschicht ist das Safe & Secure Flash File System SSFFS dafür verantwortlich den High-Level Zugriff für Applikationen bereitzustellen. In dieser Schicht werden einer Applikation einfache Dateioperationen bereit- gestellt, ohne die Notwendigkeit sich um Flash-spezifische Details kümmern zu müssen. Das Dateisystem kümmert sich um das "Wear Leveling" und stellt sicher, dass sich Dateien immer in einem konsistenten Zustand befinden. Grundsätzliche Daten einer Anwendung wie Konfigurationen oder flüchtige Daten werden mit Hilfe der Dateisystemschicht auf dem Flash-Chip gespeichert.

Zusätzlich zu den drei Schichten über der MTD Schicht ist die "Chain of Trust" verantwortlich Applikationen während des Hoch-Bootens zu verifizieren.

Das erfindungsgemäße autonom bootende System wurde mit Fokus auf das (sichere) Einspielen von neuen Versionen einer Applikation entworfen, das heißt zum Beispiel durch die Verwendung von gewissen Sicherheitsmechanismen, wie der Einbringung von Redundanz in Meta-Informationen und Code-Partitionen.

Dabei liegt der Schwerpunkt darauf, das Extrahieren von Geheimnissen zu verhindern, z.B. auf den Erhalt der Vertraulichkeit von Code und Daten. Das erfindungsgemäße System ist von dem Hardware-Support eines speziellen Anwender-Spezifischen-Integrierten-Schaltkreises (ASIC), welcher ein eingebautes Sicherheitsmodul enthält, und dem Zusammenspiel mit der Software geprägt.

Dieses Sicherheitsmodul SM stellt grundlegende symmetrische Verschlüsselungsroutinen, asymmetrische Signatur-Erzeugungsroutinen und Routinen zur Ver- und Entschlüsselung von Schlüsselmaterial bereit. Darüber hinaus kümmert sich das Sicherheitsmodul SM darum die Chiffrierungs-Hauptschlüssel in geeigneten Registern abzulegen, unabhängig von RAM oder dem Flash-Chip.

Dabei wird von der Voraussetzung ausgegangenen, dass man dem ASIC mit dem Sicherheitsmodul trauen kann, d.h. physikalische Angriffe wie "Fault Injection" sind ausgeschlossen, und es wird gezeigt, dass das erfindungsgemäße autonom bootende System bestimmten Angriffen widersteht.

Das Systemkonzept des erfindungsgemäßen autonom bootenden Systems in detaillierterer Form ist:
- Basierend auf einem Low-Level-Treiber und Softwareanwendungen kryptografischer Primitiven wurde eine symmetrische Schlüsselhierarchie entworfen und implementiert. Der Hauptschlüssel der Hierarchie ist sicher in den Hardware-Registern des Sicherheitsmoduls SM gespeichert, wohingegen die anderen Schlüssel mit ihrem übergeordneten Schlüssel verschlüsselt und im RAM gespeichert sind.
- Eine Sicherheitsschicht, welche mittels Error-Correcting-Codes (ECC) / Fehlerkorrigierender Verfahren die Daten vor sporadischen, zufälligen und nicht beabsichtigten Bit-/Byte-Kippern Sektorenweise schützt.
- Eine Securityschicht, welche mittels Sektoren-weiser Datenverschlüsselung Vertraulichkeit bereitstellt, wurde entworfen und implementiert. Zusätzlich zur Verschlüsselung ist die Integrität der Daten ebenfalls auf einer Sektoren-weisen
- Basis, sowie durch Berechnung eines Message-Authentication-Codes über jeden Sektor, indem dieser Code gelesen, und während des Lesens verifiziert wird, sichergestellt.
- Obenauf der Sicherheitsschicht wurde ein Dateisystem entworfen und implementiert, welches zusätzlich zu den grundlegenden Dateisystemoperationen konsistente Dateien zu jedem Zeitpunkt garantiert, "Basic-Wear-Leveling" für den darunterliegenden Flash-Chip durchführt und fähig ist mit Flash-Chips umzugehen, welche wiederum sowohl als auch nicht Page-weise löschbar sind.
- Ein Schema wurde entworfen, um den Flash-Chip für die verschiedenen Anwendungen potentiell unterschiedlicher Anbieter und für das Betriebssystem OS aufzuteilen. Während des Bootvorgangs wird eine "Kette des Vertrauens" (siehe FIG. 7) erstellt, indem digitale Signaturen von Anwendercode, welcher im nächsten Schritt zu laden ist, verifiziert werden.

Das Sicherheitsmodul SM des ASIC kann in mancher Hinsicht mit dem "Trusted Plattform Module" (TPM) für Desktop Computer und Notebooks [Trusted Computing Group, Incorporated. TPM Main: Part 1 Design Principles, Specification Version 1.2, Revision 116 edition, Mar. 2011] verglichen werden. Viele Features, z.B. ein fest zugeordneter Sicherheitsspeicher für Hauptschlüssel einer Geräte-spezifischer Verschlüsselung und die Möglichkeit zur Erzeugung digitaler Signaturen, werden zwischen dem Sicherheitsmodul und den TPMs geteilt.

Es gibt jedoch eine Menge Unterschiede, da das Sicherheitsmodul SM keine asymmetrische Verschlüsselung und Hashing unterstützt, wohingegen TPMs in ihrer Minimalkonfiguration keine symmetrischen Verschlüsselungsalgorithmen unterstützen. Im Rahmen einer detaillierten Sicherheitsauswertung des erfindungsgemäßen Sicherheitsmoduls SM wurde eine Menge verschiedener Angriffsszenarios und Angriffsmuster berücksichtigt, zum Beispiel, physikalischer Zugriff auf den Flash-Chip, Zugriff auf das RAM und Downgrade-Attacken.

Symmetrische Schlüssel werden für die Verschlüsselung der verschiedenen Teile der Applikation verwendet, sprich für den Code, die Daten und die Log-Partition und optional für den Integritätscheck auf einer Sektor-weisen Basis mit Hilfe des CMAC - Algorithmus (Cipher-based Message Authentication Code). Die Anforderungen für die symmetrische Schlüsselhierarchie besagen grundsätzlich, dass multiple beteiligte Parteien sich gegenseitig nicht vertrauen, und dass es ihnen nicht erlaubt ist auf die Software des jeweils anderen zuzugreifen.

Im Detail wurden die nachfolgenden Anforderungen erfüllt:
- Unterschiedliche Interessengruppen müssen die Möglichkeit haben ihre eigene Applikationssoftware zu installieren ohne dabei Zugriff auf den Betriebssystemcode zu haben.
- Code und Daten welche auf dem Flash-Chip zu speichern sind müssen verschlüsselt sein.
- Schlüssel dürfen in nicht verschlüsselter Form niemals im RAM freigelegt werden, sondern nur in eingehüllter Form, d.h. authentifiziert-verschlüsselter Schlüssel-Pakete.
- Code in dem RAM wird als sicher angesehen. Das Betriebssystem kümmert sich um die Separierung der Applikationen voneinander.

FIG. 8 zeigt eine symmetrische Schlüsselarchitektur im normalen Betrieb mit verschiedenen Schlüsseln, welche voneinander abhängen.

Während des Normalbetriebs, d.h. nachdem das Betriebssystem gestartet wurde, wird die Wurzel der Schlüsselhierarchie, und je Gerät ein einziger Hauptschlüssel zufällig erzeugt, wobei jeder Schlüssel der Hierarchie eingehüllt ist, was bedeutet, dass er mit seinem übergeordneten Schlüssel verschlüsselt ist.

Beim in FIG. 8 dargestellten Baum gibt es einen Schlüssel für das Betriebssystem OS und zwei Schlüssel für Kunden-definierte Applikationen. Der Schlüssel der ersten Applikation K_{APP1} besitzt vier weitere Unterschlüssel, welche mit dem Applikationsschlüssel eingehüllt sind, und für feiner granulierte Steuerung der Verschlüsselung wird ein spezifischer Teil dieser Applikation verwendet. Insbesondere werden die Schlüssel K_{Code}, K_{Data} und K_{Log} zum Verschlüsseln der Partitionen auf dem Flash-Chip, und der Schlüssel K_{CMAC} zu Sicherstellung der Integrität verwendet.

Die Verwendung von Unterschlüsseln für eine bestimmte Applikation ist sinn-voll, denn falls der Unterschlüssel gefährdet ist, muss nur der Zweig, welcher den kompromittierten Schlüssel als Übergeordneten hat, entfernt werden.

Der Bootprozess und die Laderoutinen sind wie folgt. Erfindungsgemäß wird das Betriebssystem OS durch einen Second Stage Bootloader SSB (siehe FIG. 6) geladen, und danach lädt das Betriebssystem OS die Anwendungen.

Der Second Stage Bootloader SSB selbst wird entschlüsselt, und durch den First Stage Bootloader geladen, und benötigt entweder einen öffentlichen oder einen symmetrischen Schlüssel, um das Betriebssystem verifizieren, und einen symmetrischen Schlüssel, um das Betriebssystem zu entschlüsseln.

Während der symmetrische Schlüssel KOS direkt in dem Flash-Speicher gespeichert ist, kann - um unautorisierte Modifikationen zu verhindern - der öffentliche Schlüssel PUBOS in einem Schlüsselring innerhalb des SSB-Images (d.h. ein ausführbares Programm). Nachfolgend werden die Schritte während des Boot-Vorgangs mittels eines öffentlichen Schlüssels für die Verifikation und einem symmetrischen Schlüssel zur Entschlüsselung kurz skizziert.

Das Betriebssystem OS wird folgendermaßen gebootet:
1. PUBOS (d.h. einer der Blattschlüssel BS) wird verwendet, um die OS Signatur zu verifizieren.
2. KOS wird einer zwischenzeitlichen SSB Schlüsselhierarchie hinzugefügt.
3. Der verschlüsselte Betriebssystemcode wird in das RAM geladen, dort entschlüsselt und gestartet.

Nachdem das Betriebssystem OS gebootet ist können die Applikationen geladen werden. Das Betriebssystem OS benötigt für jede Applikation, welche es laden will, einen öffentlichen Schlüssel. Die öffentlichen Schlüssel werden in einem Schlüsselring innerhalb des Betriebssystem-Images gespeichert, um unautorisierte Modifikationen zu verhindern. Im Gegensatz dazu sind die symmetrischen Schlüssel einer jeden Applikation direkt im Flash-Speicher gespeichert. Eine Applikation wird nun folgendermaßen geladen:
1. Die Metadaten der Applikation werden in das RAM geladen.
2. PUB_{APPn} wird verwendet, um die Applikationssignatur zu verifizieren.
3. Der Hauptschlüssel der Applikation K_{APPn} und die Unterschlüssel K_{Code}, K_{CMAC}, K_{Data} und K_{Log} werden der Betriebssystemschlüsselhierarchie hinzugefügt.
4. Block-Device-basierende Geräte für die Daten und Log-Partition werden mit Hilfe der Schlüssel K_{Data} und K_{Log} erzeugt. Falls die Integritätsprüfung aktiviert wurde, wird K_{CMAC} auch an den Block-Device-Treiber übergeben.
5. Das Dateisystem der Datenpartition wird mit den übergebenen Parametern eingehängt.
6. Der verschlüsselte Applikationscode wird in das RAM geladen, dort entschlüsselt und gestartet.

Die Schlüssel, welche der Schlüsselhierarchie hinzugefügt wurden, sind während der Lebenszeit der Applikation persistent, und werden von der Applikation mit Hilfe des Block-Device-Treibers implizit verwendet.

Die Verschlüsselung und Integritätsprüfung wird wie folgt durchgeführt. Die Securityschicht ist imstande die Verschlüsselung mit AES-128 [siehe J. Daemen and V. Rijmen, The Block Cipher Rijndael, in J.-J. Quisquater and B. Schneier, editors, Smart Card Research and Applications, volume 1820 of Lecture Notes in Computer Science, pages 277- 284, Springer Berlin Heidelberg, 2000] entweder im CBC-ESSIV Betriebsmodus [National Institute of Standards and Technology, Recommendation for Block Cipher Modes of Operation, special publication 800-38a edition, Dec. 2001], oder im XEX Betriebsmodus [P. Rogaway, E, cient Instantiations of Tweakable Blockciphers and Refinements to Modes OCB and PMAC, in Advances in Cryptology - ASIACRYPT 2004, volume 3329 of Lecture Notes in Computer Science, pages 16-31, 2004] durchzuführen. In der Regel ist der XEX Betriebsmodus aktiviert.

Bei der Verwendung von CBC-ESSIV wird der Initialisierungsvektor eines jeden Disk-Sektors durch Verschlüsselung der jeweiligen Disk-Sektor-Nummer, d.h. der Flash-Page-Nummer bestimmt. Dabei ist zu beachten, dass nicht der Offset vom Start der Partition für die Disk-Sektor-Nummer verwendet wird, stattdessen der globale Offset vom Anfang des Flash-Speichers. Die Wahl des Designs verhindert die Wiederholung von Initialisierungsvektoren für zwei verschiedene Partitionen.

Im XEX Betriebsmodus wird der "Tweak" für jeden Disk-Sektor durch Verschlüsselung der jeweiligen Disk-Sektor-Nummer bestimmt, analog zu dem wie es bei CBC-ESSIV getan wird. Die Integrität einer Applikation und deren Metadaten werden mit Hilfe der ECDSA-Signatur (Elliptic Curve Digital Signature Algorithm) und einem asymmetrischen Schlüssel. Code und Metadaten ändern sich nicht häufig und können daher mit einer statischen Signatur verifiziert werden.

Im Gegensatz dazu ändern sich die Daten schon häufig, deshalb kann deren Integrität nicht einfach mit Hilfe einer statischen Signatur verifiziert werden. Ist stattdessen die Sicherstellung der Integrität für Daten aktiviert, so wird bei jeder Schreiboperation pro Sektor, nach einer möglichen Verschlüsselung des Sektors, ein CMAC-Tag (Cipher-based Message Authentication Code) erzeugt. Bei jeder Leseoperation wird der CMAC-Tag exakt genauso wie bei der Schreiboperation erzeugt, und mit dem angehängten CMAC-Tag verglichen.

Falls beide übereinstimmen, wird der Sektor potentiell entschlüsselt und in den Speicher zurückgeschrieben.

Falls die Tags nicht übereinstimmen, wird die Entschlüsselung nicht durchgeführt und dem Aufrufer ein Input-Output-Fehler zurückgegeben.

Ein CMAC-Tag Verifikationsfehler kann mehrere Ursachen haben. Falls alles korrekt implementiert ist und die Fehlerkorrektur wie vorgesehen arbeitet, ist ein fehlerhafter Integritätscheck ein ernstzunehmender Indikator einer Manipulation und sollte von dem Applikationsentwickler behandelt werden, z.B. durch Auslösen eines Alarms und Anhalten des Prozessors.

Fehlerhafte Integritätsprüfungen können jedoch auch das Ergebnis einer fehlerhaften Implementierung sein. Insbesondere schlägt die Integritätsprüfung am wahrscheinlichsten fehl, falls eine Sektor, welche vorher nicht geschriebenen wurde, gelesen wird. Aus diesem Grund muss ein Anwendungsentwickler, welcher die Integritätsprüfungsfunktionalität der Sicherungsschicht verwendet, sicherstellen, dass Leseoperationen nur im Anschluss an mindestens eine Schreiboperation des jeweils selben Sektors durchgeführt werden

Vorzugsweise ist das Sicherheits- und Sicherungs-Flash-Datei-System SSFFS (siehe FIG. 7) für sehr kleine Flash-Speicher geeignet, beispielsweise Flash-Speicher mit einer Gesamtgröße von nur einem Megabyte. Es arbeitet mit Partitionen, welche eine Größe von 128 oder sogar 64 Kilobytes haben.

Des Weiteren wurde es entworfen, um mit Raw-Flashes zu arbeiten, d.h. um Löschoperationen durchzuführen, Modifikationen gesamter Flash-Pages zu verhindern und sicherzustellen, dass Pages des Flash-Speichers gleichmäßig oft gelöscht werden.

Der Hauptunterschied zwischen einem üblichen Dateisystem und einem Flash-Dateisystem ist, dass das Letztere sich um das Löschen kümmern, und Wear-Leveling durchführen muss, d.h. das Löschen der Flash-Sektoren muss gleichmäßig oft erfolgen.

Des Weiteren besitzt das erfindungsgemäße Dateisystem kein Journal oder andere Log-Informationen, jedoch stellt es sicher, dass sich jede Datei zu jedem Zeitpunkt in einem konsistenten Zustand befindet.

Um dies zu erreichen, sind die Dateien in Form eines Baumes mit statischer Tiefe organisiert. Ein Knoten innerhalb des Baumes ist entweder ein Datenknoten, welcher eigentliche Dateidaten enthält, oder ein indirekter Knoten, welcher auf andere Knoten referenziert. Der Wurzelknoten, auch Metaknoten genannt, besitzt eine statisch definierte Anzahl von Zeigern auf indirekte Knoten, doppelt indirekte Knoten und dreifach indirekte Knoten.

Die verbleibenden Zeiger werden als Zeiger auf Datenknoten aufgefasst.

Dieses Konzept wurde an einem Flash-Friendly-File-System (F2FS) [siehe J. Y. Hwang. Flash Friendly File System (F2FS), Embedded Linux Conference, Feb. 2013] angelehnt, und besitzt den Vorteil, dass Daten, welche an spezifischer Tiefe innerhalb des Baum gespeichert sind, immer an dieser Tiefe bleiben, was wichtig für die Garbage-Collection (Automatische Speicherbereinigung, welche in der Software- und Informationstechnik eine automatische Speicherverwaltung bezeichnet, die den Speicherbedarf eines Computerprogramms minimiert) ist.

Des Weiteren kann der Offset zur stückweisen Konvertierung mit diesem Ansatz in konstanter Zeit durchgeführt werden. Eine Datei wird in Stücke aufgeteilt und an die Datenknoten dieses Baums verteilt. Die Dateiknoten werden mit Hilfe der Securityschicht physikalisch auf dem Flash-Chip gespeichert. Es ist zu jeder Zeit sichergestellt, dass Knoten der gleichen Tiefe mit derselben "Flash Erase Size" gespeichert werden, um die Garbage Collection zu vereinfachen. Diese Maßnahme wurde an LogFS angelehnt [siehe J. Brockmeier. LogFS: A new way of thinking about flash filesystems, May 2007.].

Grundsätzlich ist die Konsistenz von Dateien garantiert, indem die modifizierten Knoten von den Enden (Blättern) hin zu dem Metaknoten an neue Speicherstellen geschrieben werden. Bis zu diesem Zeitpunkt werden die alten Knoten als nichtreferenziert markiert, und infolgedessen wurde nach einem unerwarteten Reboot mindestens ein gültiger Baum für jede Datei gefunden.

Es ist sichergestellt, dass in einem derartigen Baum kein Knoten fehlt, da der Metaknoten als letztes geschrieben wird, und die zu dem Baum korrespondierende Datei auf diese Weise in einem konsistenten Zustand ist, weil Knoten niemals modifiziert werden.

Nachfolgend wird das erfindungsgemäße Gesamtsystem hinsichtlich Sicherheit und Leistungsvermögen bewertet. Hinsichtlich physikalische Sicherheit wird angenommen, dass es einem Angreifer möglich ist Daten, welche auf dem Flash-Chip gespeichert sind zu lesen, und des Weiteren, dass er die Fähigkeit besitzt Daten auf dem Flash Chip gespeichert sind Flash-Page-Weise zu ändern. Falls eine Applikation alle Sicherheitsmaßnahmen aktiviert hat, ist es dem Angreifer für diese Applikation nur möglich Metadaten zu erlangen.

Obwohl der Angreifer Zugang zu den Schlüsseln für jede Applikation hat ist es ihm nicht möglich, diese zu entschlüsseln, da er den K_{Master}, mit welchem der Hauptschlüssel verschlüsselt ist, nicht kennt. Folglich kann er den Hauptschlüssel für diese Applikation nicht erlangen und ist daher nicht in der Lage die anderen Schlüssel zu entschlüsseln. Da er die Chiffrierungsschlüssel für den Code und die Datenpartition nicht erlangen kann, ist er nicht in der Lage diese Partitionen zu entschlüsseln.

Angenommen, dass alle Partitionen einer Applikation mit dem XEX Betriebsmodus verschlüsselt sind, sind Manipulationen sowohl des Codes als auch der Daten nicht möglich. Es ist daher für einen Angreifer unmöglich ein spezifisches Verhalten zu erzwingen, welches zur Offenlegung des geheimen Schlüsselmaterials führen würde.

Nichts desto trotz könnte er versuchen die Integritätseigenschaft einer vorliegenden Applikation zu verletzen, jedoch würde dies beim Booten von Code, Metadaten und den Schlüsseln sofort erkannt werden. Grundsätzlich ist das Booten eines jeden Levels durch dessen vorherigen Level verifiziert, und darum kann der derzeitige Level ohne Veränderung des vorherigen Levels nicht verändert werden. Es gibt nur für eine jede Applikation nur wenige Komponenten, welche nicht in der ECDSA Signatur enthalten sind, nämlich die Daten- und die Log-Partition. Manipulationen an der Daten- und Log-Partition werden, falls die CMAC-Integritätsprüfung aktiviert ist, entdeckt, sobald die manipulierte Flash-Page erneut gelesen wird.

Alle Manipulationen sind wegen den Integritätschecks entweder nicht möglich, oder können deswegen nicht erreicht werden. Sie werden entweder während dem Boot-Up-Prozess sofort entdeckt, oder spätestens beim Lesen der jeweiligen Flash-Page. Dies gilt uneingeschränkt nur für Manipulationen mit dem Ziel der Einbringung von Angreifer-spezifischen Codes oder Daten.

Wohingegen dies vollständig verhindert werden kann, ist das erfindungsgemäße autonom bootende System gegenüber einer anderen Art von Angriff verwundbar, nämlich Downgrade-Angriffen, bei welchen der Angreifer versucht bereits existente Daten, welche nicht durch seine Wahl bestimmt sind, einzubringen. Falls ein Angreifer Zugang zu einer veralteten Version des Flash-Chips hat, beispielsweise weil er in der Vergangenheit eine Kopie angefertigt hat, ist es ihm möglich, jede Applikation separat downzugraden. Dies funktioniert, weil die Signatur nur je Applikation verifiziert wird, und nicht für alle Applikationen zusammen.

Eine Voraussetzung für diesen Angriff ist, dass der öffentliche Schlüssel, welcher sich innerhalb des Betriebssystems OS oder des Second-State-Bootloaders SSB befindet, nicht zwischenzeitlich ausgetauscht wurde. Falls der öffentliche Schlüssel geändert wurde, ist es einem Angreifer nicht möglich einzelne Applikationen downzugraden, ohne dabei das Betriebssystem OS oder den Second-State-Bootloader SSB downzugraden. Für die anderen Partitionen einer Applikation können die Downgrades je Sektor vorgenommen werden.

Die einzigen Voraussetzungen sind, dass der Sektor der neuen und alten Version dieselbe Position auf dem Flash-Chip haben muss, und dass der Chiffrierungsschlüssel und der CMAC Schlüssel zwischenzeitlich nicht geändert wurden.

Da Integritätschecks nur auf eine Sektor-weisen Basis durchgeführt werden, können Sektoren unabhängig von anderen Sektoren ausgetauscht werden. Die Positionen müssen erhalten werden, da der Initialisierungsvektor pro Sektor von der absoluten Sektornummer abhängt und daher eine falsche Position während der Entschlüsselung zu einem falschen Ergebnis führen würde.

Zusammenfassend sind Downgrade-Angriffe der gesamten Applikation, und bei Partitionen sogar Sektor-weise gänzlich möglich und können durch das erfindungsgemäße autonom bootende System nicht verhindert werden. Dies liegt im Wesentlichen am Fehlen einer Zweitpartei, welche Fern-Attestierung leisten könnte, d.h. überprüfen, dass die derzeitig freigegebene Version ausgeführt wird. Da der Angreifer die Daten oder Code, welchen er mittels Downgrade-Angriff einbringen will, nicht kennt, ist die Angriffsfläche jedoch ziemlich beschränkt.

Alle vorherigen physikalischen Attacken haben sich auf den (externen) Flash Chip beschränkt. Für die Implementierung des erfindungsgemäßen autonom bootenden Systems wurde angenommen, dass der (externe) Flash Speicher nicht vertrauenswürdig und der interne RAM-Speicher vertrauenswürdig ist

Nachfolgend soll der worst-case betrachtet, nämlich was ein Angreifer im Stande ist zu tun, wenn er Zugriff auf die Inhalte des RAM-Speichers erhält während das erfindungsgemäße System am Laufen ist, wie zum Beispiel mit einer Cold Boot Attacke [siehe J. A. Halderman, S. D. Schoen, N. Heninger, W. Clarkson, W. Paul, J. A. Calandrino, A. J. Feldman, J. Appelbaum, and E. W. Felten. Lest We Remember: Cold Boot Attacks on Encryptions Keys. In Proceedings of the 17th USENIX Security Symposium, pages 45-60, San Jose, CA, Aug. 2008, Princeton University, USENIX Association]. Die Cold Boot Attacke beschreibt das Tiefkühlen von Speicherzellen, die anschließend für längere Zeit ihren Zustand behalten und von einem anderen System ausgelesen werden können.

Natürlich hängen die im Speicher enthaltenen Daten stark von der gerade ausgeführten Applikation ab. Es kann angenommen werden, dass der komplette Code der ausgeführten Software auf diese Weise auslesbar ist. Jedoch ist das Schlüsselmaterial in sogenannten Schlüsselpaketen eingepackt und im RAM-Speicher gelagert. Diese können nur in den entsprechenden Hardware-Registern / Modulen entpackt und verwendet werden.

Die einzigen Schlüssel, die im Klartext in RAM gespeichert werden, sind die öffentlichen Schlüssel, die für die Verifizierung der Signaturen der unterschiedlichen Applikationen verwendet werden. Aufgrund der Tatsache, dass diese Schlüssel öffentlich sind, hat der Angreifer nichts davon diese zu stehlen. Ein Angreifer kann grundsätzlich den kompletten Inhalt des RAM-Speichers auf diese Weise beschaffen. Der RAM-Inhalt besteht dabei aus dem Code und den Daten der jeweils ausgeführten Applikationen.

Nichtsdestotrotz ist er nicht in der Lage zusätzlichen Code und Daten von Applikationen, die im Moment nicht laufen zu beschaffen, da er keinen Zugriff auf das entsprechende Schlüsselmaterial für eine Entschlüsselung für eben diese hat. Um die Extraktion von Informationen (Code + Daten) aus dem RAM-Speicher vollständig verhindern zu können, sind komplexere Gegenmaßnahmen notwendig wie zum Beispiel die Verschlüsselung des RAM-Speichers, welche optional über das Sicherheits-Modul SM der beschriebenen Erfindung zu- oder abgeschalten werden kann [siehe P. Peterson. Cryptkeeper: Improving security with encrypted RAM. In IEEE International Conference on Technologies for Homeland Security (HST), pages 120-126, Nov 2010].

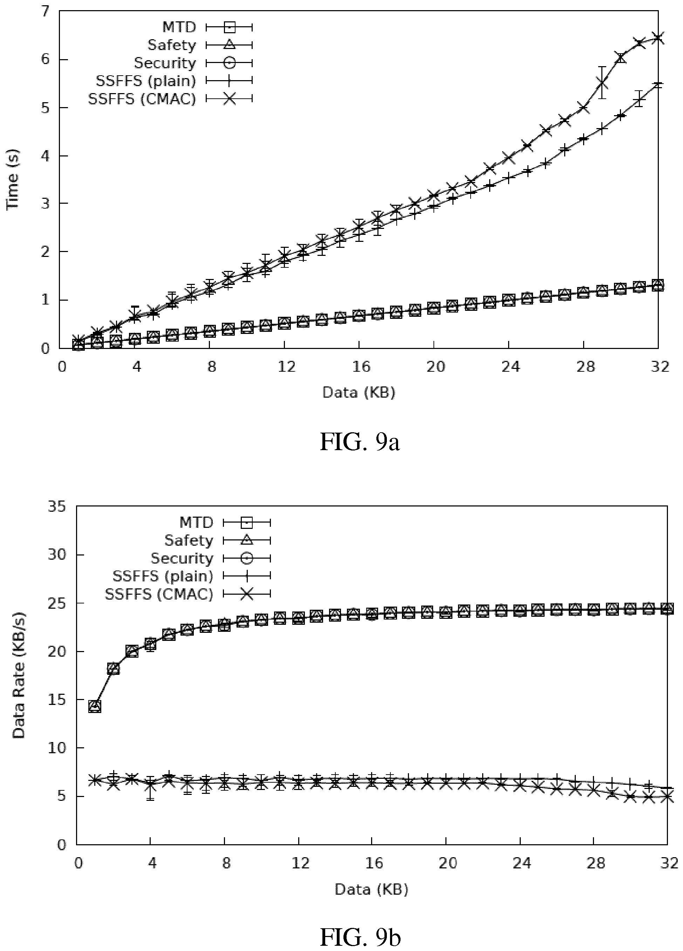

In FIG. 9a und FIG. 9b wird die Schreibgeschwindigkeit der unterschiedlichen Schichten dargestellt.

In FIG. 9a wird die benötigte Zeit über die kontinuierlich wachsenden in den externen Speicher ES zu schreibende Datenmengen aufgetragen. In FIG. 9b ist stattdessen die Datenrate aufgetragen. Die Zeit fürs Schreiben wird dabei dominiert von der benötigten Zeit in den externen Speicher ES zu schreiben. Schreibzugriffe über den Safety-Layer und Security-Layer sind genauso schnell wie direkte Schreibzugriffe auf den Flash-Speicher (MTD Device).

Diese zeigt sich in beiden Diagrammen anhand der Tatsache, dass alle drei Kurven übereinander liegen. Schreibzugriffe über das SSFFS-Dateisystem sind grundsätzlich vier bis fünfmal langsamer als Schreibzugriffe auf den niedrigeren Schichten, weil mehr Flash-Speicher-Pages geschrieben werden müssen als jene die eigentlich Daten enthalten. Die Schreibzeit des SSFFS-Dateisystems wird dabei von der Anzahl der Knoten dominiert, die zusätzlich zu den eigentlichen Datenknoten geschrieben werden müssen. Zum Beispiel muss ein Meta-Knoten bei jeder Änderung, und gegebenenfalls auch ein innerer Knoten neu geschrieben werden.

Der zeitliche Einfluss der aktivierten CMAC Integritätsüberprüfung auf die Security-Schicht ist nicht messbar, weil alle Berechnungen komplett in Hardware gemacht werden. Wenn CMAC Überprüfungen im Zusammenspiel mit dem SSFFS-Dateisystem verwendet werden, ist das Dateisystem etwas langsamer als ohne CMAC Überprüfung, da Änderungen in der Baumstruktur einen größeren Einfluss haben. Das ist der Tatsache geschuldet, dass indirekte Knoten früher erzeugt werden, falls weniger Zeiger pro Knoten zur Verfügung stehen.

Zusammengefasst ist die Schreibgeschwindigkeit des erfindungsgemäßen Dateisystems von fünf Kilobytes pro Sekunde akzeptabel, wenn man die unterstützten Funktionalitäten des Dateisystems mit berücksichtigt.

Eine Eigenschaft des erfindungsgemäß autonom bootenden Systems ist die Tatsache, dass das System ohne Interaktion von weiteren Personen / Entitäten seine Arbeit verrichten muss und die Integrität und Authentizität der ausgeführten Software sicherstellen muss. Eine Konsequenz dieser Eigenschaft ist die Tatsache, dass das Einspielen von alter Software im Ausführungsbeispiel möglich ist, was grundsätzlich bedeutet, dass Sicherheitslücken / Fehler in älteren Software Versionen ausgenützt werden können, selbst wenn bereits eine neue Version eingespielt wurde, indem die aktuelle Software mit einem alten Stand überspielt wird.

In Weiterentwicklung der Erfindung kann dieses Problem dadurch behoben werden, indem zum Beispiel ein Hardware-Zähler eingeführt wird, der nur Lese- und Inkrementieroperationen erlaubt, jedoch keine Schreib- oder Dekrementieroperationen unterstützt. Software würde anschließend nur ausgeführt werden, wenn die Version mit dem Wert im Hardware-Zähler übereinstimmt.

Im Rahmen des erfindungsgemäßen Systems ist es möglich Updates zu empfangen und Funktionen / Routinen, die im Stande sind diese Updates zu installieren. Zur Implementierung von Funktionen, kann eine Schnittstelle für das Updaten von Applikationen vorgesehen werden.

Erfindungsgemäß wird das Sicherheitsmodul erweitert, um das sichere Einbringen von authentifiziert verschlüsseltem Schlüsselmaterial zu ermöglichen. In vorteilhafter Weise wird eine Reduktion der schützenswerten Datenspeicher innerhalb des Sicherheitsmoduls durch Auslagerung von Klartext-Schlüsselmaterial innerhalb des integrierten Schlüsselspeichers in authentifiziert-verschlüsselte Schlüsselpakete in generische Datenspeicher ermöglicht, die größer, billiger, flexibler, performanter und erweiterbarer als durch Hardwaremaßnahmen geschützte Schlüsselspeicher innerhalb eines Sicherheitsmoduls sind. Zusätzlich wird die ausgeführte Software auf einen durch externe Beschaltung oder software-definiertem Header konfigurierbarem First Stage Bootloader reduziert, um einerseits die Komplexität der in "Read-Only-Memory" (ROM) hinterlegten Software und somit die Wahrscheinlichkeit von potenziell verdeckten funktionalen Fehlern zu verringern und andererseits die mögliche Angriffsfläche durch Dritte so gut wie möglich zu verkleinern. Weiterhin ist das Sicherheitsmodul in den Bootprozess integriert, um die Konsistenz (Consistency), Vertraulichkeit (Confidentiality) und Authentizität (Authenticity) des verwendeten Schlüsselmaterials, der ausgeführten Software und die korrekte Funktionalität des Produktes sicherzustellen. In vorteilhafter Weise wird durch die durchgängige Verwendung der Funktionalität des Sicherheitsmoduls durch alle Schichten der Software - beginnend mit dem Bootprozess bis hin zum Betrieb - eine sogenannte Chain-of-Trust aufgebaut, beginnend mit den Wurzelschlüsseln im Schlüsselspeicher und endend mit den Blattschlüsseln in internen / externen Datenspeichern zur Speicherung von Code und Daten in den zuvor genannten Datenspeichern. Das erfindungsgemäße Sicherheitsmodul kann auch mehrstufige sichere Bootkonzepte unterstützen, wobei kein Umschalten von Adressräumen notwendig ist, um die Konsistenz und / oder die Vertraulichkeit der geladenen Software zu erlangen und somit ist auch kein Bruch in der Schlüsselhierarchie notwendig. Insbesondere durch den Prozess zur sicheren Einbringung von Schlüsseln Dritter ohne Kenntnis über den Klartext des Schlüssels des Dritten bei der Herstellung zu haben, können multiple Entitäten sicher koexistieren ohne (technische) Kompromittierung des jeweils anderen Schlüssels. Damit ist es möglich, multiple unabhängige Applikationen mit jeweils unabhängigen Schlüsseln auszustatten.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Verschlüsselungssystem mit einem applikationsspezifischen integrierten Schaltkreis-ASIC, welcher einen Permanentspeicher für die nicht-flüchtige Speicherung vom Betriebssystem (OS) eines Prozessors und Softwaremodulen für die Verschlüsselung des Datenspeichers des Prozessors und welcher einen hardwaremäßig implementierten Verschlüsselungsalgorithmus aufweist, wobei zum autonomen Booten des Betriebssystems (OS) ein Sicherheitsmodul (SM) im ASIC integriert ist, bestehend aus:
- einem Symmetrischen Kryptosystem (SK) für die Verarbeitung von symmetrischen Schlüsseln,
- einem Asymmetrischen Kryptosystem (AK) für die Verwendung von öffentlichen und privaten Schlüsseln,
- einem Modul für die Erzeugung von Kryptographischen Hashfunktionen (KH),
- einem Modul für den sicheren Austausch von Schlüsseln mit in Hardware implementierten Schlüsselaustauschprotokollen (SP),
- einem Schlüssel-Speicher (SS) für die sichere Verwahrung von Wurzel-Schlüsseln (WS),
- einer Schlüssel-Verwaltung (SV) für das sichere Einbringen von authentifiziert-verschlüsselten Schlüssel-Paketen und
- einer oder mehreren Schlüssel-Hierarchien (SH), welche auf einen oder mehreren der im Schlüssel-Speicher (SS) hinterlegten Wurzel-Schlüsseln (WS) basieren und die direkten Nachfolger mit diesem Schlüsselmaterial authentifiziert verschlüsselt sind,
dass das Sicherheits-Modul (SM) über eine Kommunikations-Schnittstelle (KS1) mit einer Zentralen Verarbeitungseinheit (ZVE) in Verbindung steht und dass die Zentrale Verarbeitungseinheit (ZVE) sowohl mit mindestens einem internen Speicher (IS) und einem externen Speicher (ES) als auch mit mindestens einem internen Permanentspeicher (IP) und einem externen Permanentspeicher (EP) in Verbindung steht, derart, dass das Betriebssystem (OS) durch einen Second Stage Bootloader (SSB), welcher im externen Permanentspeicher (EP) gespeichert ist, geladen wird, und danach das Betriebssystem (OS) die Anwendungen lädt, wobei der Second Stage Bootloader (SSB) selbst entschlüsselt und durch einen First Stage Bootloader (FSB), welcher im internen Permanentspeicher (IP) gespeichert ist, geladen ist, und entweder einen öffentlichen oder einen symmetrischen Schlüssel (PUBOS), um das Betriebssystem (OS) zu verifizieren, und einen symmetrischen Schlüssel (KOS), um das Betriebssystem (OS) zu entschlüsseln, benötigt und dass der Inhalt des internen Speichers (IS) und des externen Speichers (ES) durch das Sicherheits-Modul (SM) bei Lesezugriffen durch die Zentrale Verwaltungseinheit (ZVE) oder anderen auf dem ASIC integrierten Modulen entschlüsselt und bei Schreibzugriffen der Selbigen wieder verschlüsselt.

2. Verschlüsselungssystem nach Anspruch 1, **dadurch gekennzeichnet, dass** eine oder mehrere interne Speicher (IS) als auch eine oder mehrere externe Speicher (ES) über das Sicherheits-Modul (SM) in verschlüsselter Form betrieben werden, derart, dass der Inhalt verschlüsselt ist und somit die verschlüsselten Speicher (IS, ES) als vertrauenswürdig gelten.

3. Verschlüsselungssystem nach Anspruch 1, **dadurch gekennzeichnet, dass** sowohl die internen Permanentspeicher (IP) als auch die externen Permanentspeicher (EP) als nicht vertrauenswürdig gelten und die Daten in authentifizierbarer und verschlüsselter, mindestens jedoch in authentifizierbarer Form abgelegt sind.

4. Verschlüsselungssystem nach Anspruch 1, **dadurch gekennzeichnet, dass** Schlüsselmaterial außerhalb des Sicherheits-Moduls (SM) in einem authentifiziert-verschlüsselten Schlüssel-Paket eingehüllt ist und das enthaltene Schlüsselmaterial erst innerhalb des Sicherheits-Moduls (SM) im Klartext verwendbar ist.

5. Verschlüsselungssystem nach Anspruch 1, **dadurch gekennzeichnet, dass** für die Verwendung des Sicherheits-Moduls (SM) im Zusammenspiel mit inhärent unsicheren Permanentspeichern mindestens eine Software-Schicht für die Korrektur von nicht beabsichtigten Veränderungen des Inhaltes von Permanentspeichern mittels Error-Correcting-Codes für Bit-Kipper / Byte-Fehler als Safety-Schicht und mindestens eine Software-Schicht für die Verschlüsselung der Daten mit anschließender Authentifizierung bzw. Integritätssicherung der verschlüsselten Daten als Security-Schicht vorgesehen sind.

6. Verschlüsselungssystem nach einem der Ansprüche 1 bis 5, **dadurch gekennzeichnet, dass** die Wurzel-Schlüssel (WS) nicht außerhalb des Sicherheits-Moduls (SM) zugreifbar sind.

7. Verschlüsselungssystem nach Anspruch 5, **dadurch gekennzeichnet, dass** Zweig-Schlüssel (ZS) durch ihre jeweiligen Vorgänger in der Schlüsselhierarchie innerhalb des Sicherheits-Moduls (SM) authentifiziert und entschlüsselt werden und das enthaltene Schlüsselmaterial für die Entschlüsselung / Verschlüsselung weiterer Schlüsselpakete für Zweig-Schlüssel (ZS) und Blatt-Schlüssel (BS) herangezogen werden kann.

8. Verschlüsselungssystem nach Anspruch 7, **dadurch gekennzeichnet, dass** Blatt-Schlüssel (BS) durch ihre jeweiligen Vorgänger in der Schlüsselhierarchie innerhalb des Sicherheits-Moduls (SM) authentifiziert und entschlüsselt werden und das enthaltene Schlüsselmaterial für die Entschlüsselung / Verschlüsselung von Code bzw. Daten herangezogen werden kann.

9. Verschlüsselungssystem nach Anspruch 1, **dadurch gekennzeichnet, dass** die Zentrale Verwaltungseinheit (ZVE) das integrierte Sicherheits-Modul (SM) oder in der umhüllenden Ausprägung in Form der Smartcard (SC) als Coprozessor für die Erfüllung von kryptographischen Aufgaben betrachtet.

10. Verschlüsselungssystem nach Anspruch 1, **dadurch gekennzeichnet, dass** eine initiale Software (FSB) vor Ausführung mindestens auf ihre Integrität, Authentizität überprüft wird, dass jede weitere Software-Stufe durch die vorhergehende Software mittels dem Sicherheits-Modul (SM) authentifiziert, integritätsüberprüft und entschlüsselt, mindestens jedoch authentifiziert und integritätsüberprüft wird, so dass die Integrität, Authentizität und Geheimhaltung der ausgeführten Software des Systems während des Boot-Prozesses sichergestellt wird.

11. Verfahren für ein Verschlüsselungssystem mit einem Sicherheits-Modul (SM) nach Anspruch 1, bei dem:
- eine sichere Behandlung von kryptographischen Schlüsselmaterial außerhalb des Sicherheits-Moduls (SM) durch die Verwendung von authentifiziert-verschlüsselter Schlüsselpakete gewährleistet ist,
- die Integrität, Authentizität und Geheimhaltung der ausgeführten Software durch die Einführung eines sicheren autonomen Boot-Prozesses (BP) mit durch in Hardware implementierter Routinen, welche die folgenden Schritte:
1. Berechnung einer Prüfsumme für die in einem internen Permanentspeicher (IP) oder externen Permanentspeicher (EP) abgelegte Software und anschließenden Vergleich mit vorher bestimmter Prüfsumme,
2. Falls übereinstimmende Prüfsummen wird die Software ausgeführt, ansonsten wird der Zugriff auf das Sicherheit-Modul (SM) unterbunden,
3. Während der Ausführung werden kontinuierlich Prüfsummen der ausgeführten Software mit vorherigen Werten verglichen und bei einem Unterschied werden entsprechende Maßnahmen ergriffen,
umfassen, gewährleistet ist,
- eine sichere Kommunikation durch die Verwendung sicherer Schlüsselaustauschprotokolle erfolgt,
- beliebig tiefe Schlüssel-Hierarchien mit Hilfe der Wurzel-Schlüssel (WS), welche in einem Schlüssel-Speicher (SS) hinterlegt und die direkten Nachfolger mit diesem Schlüsselmaterial authentifiziert verschlüsselt sind, aufgebaut werden, so dass die Implementierungen keine unnötigen Einschränkungen auf nur eine Applikation erfährt, und
- die Erweiterbarkeit der implementierten Verfahren durch die Nachrüstbarkeit von kryptographischen Verfahren in Software erfolgt, so dass eine integritätsgesicherte, authentifizierte und verschlüsselte Speicherung in nicht vertrauenswürdigen Speichern gewährleistet ist,
derart, dass das Betriebssystem (OS) durch einen Second Stage Bootloader (SSB), welcher im externen Permanentspeicher (EP) gespeichert ist, geladen wird, und danach das Betriebssystem (OS) die Anwendungen lädt, wobei der Second Stage Bootloader (SSB) selbst entschlüsselt und durch einen First Stage Bootloader (FSB), welcher im internen Permanentspeicher (IP) gespeichert ist, geladen ist, und entweder einen öffentlichen oder einen symmetrischen Schlüssel (PUBOS), um das Betriebssystem (OS) zu verifizieren, und einen symmetrischen Schlüssel (KOS), um das Betriebssystem (OS) zu entschlüsseln, benötigt und dass der Inhalt eines internen Speichers (IS) und eines externen Speichers (ES) durch das Sicherheits-Modul (SM) bei Lesezugriffen durch eine zentrale Verwaltungseinheit (ZVE) oder anderen auf dem ASIC integrierten Modulen entschlüsselt und bei Schreibzugriffen der Selbigen wieder verschlüsselt.

12. Verfahren nach Anspruch 11, **dadurch gekennzeichnet, dass** der Boot-Prozess (BP) die folgenden Schritte umfasst:
1. Laden der Software des Nachfolgers, indem ein First Stage Bootloader (FSB) Software in Form eines Second Stage Bootloaders (SSB) lädt und der Second Stage Bootloader (SSB) das Betriebssystem (OS) lädt und das Betriebssystem (OS) eine oder mehrere Applikationen in den internen oder externen Speicher (IS, ES) lädt.
2. Verifikation oder Integritätsüberprüfung anhand angewandter kryptographischer Verfahren wie Digitale Signaturen oder Message Authentication Codes mittels Asymmetrischen Kryptosystem (AK) oder Symmetrischen Kryptosystem (SK).
3. Bei korrekter Überprüfung folgt die Entschlüsselung mit entsprechendem kryptographischen Verfahren mittels Asymmetrischen Kryptosystem (AK) oder Symmetrischen Kryptosystem (SK).
4. Ausführen der entschlüsselten Software.

13. Verfahren nach Anspruch 11, **dadurch gekennzeichnet, dass** um unautorisierte Modifikationen zu verhindern, der symmetrische Schlüssel (KOS) direkt in einem Flash-Speicher und der öffentliche Schlüssel (PUBOS) in einem Schlüsselring innerhalb eines SSB-Images der Schlüsselhierarchie (SH) gespeichert ist, und dass das Betriebssystem (OS) folgendermaßen gebootet wird:
1. der öffentliche Schlüssel (PUBOS) wird verwendet, um eine Betriebssystem-Signatur zu verifizieren.
2. der symmetrische Schlüssel (KOS) wird einer zwischenzeitlichen SSB Schlüsselhierarchie (SH) hinzugefügt.
3. der verschlüsselte Betriebssystemcode wird in ein RAM (IS) geladen, dort entschlüsselt und gestartet.

## Claims

1. An encryption system having an application-specific integrated circuit ASIC, which has a permanent memory for the non-volatile storage of the operating system (OS) of a processor and software modules for encrypting the data memory of the processor and which has a hardware-implemented encryption algorithm, wherein a security module (SM) is integrated in the ASIC in order to autonomously boot the operating system (OS), comprising:
- a symmetrical crypto system (SK) for processing symmetrical keys,
- an asymmetrical crypto system (AK) for the use of public and private keys,
- a module for generating cryptographic hash functions (KH),
- a module for the secure exchange of keys with key exchange protocols (SP),
- a key memory (SS) for the secure storage of root keys (WS),
- a key management (SV) for the secure introduction of authenticated-encrypted key packets and
- one or more key hierarchies (SH), which are based on one or more of the root keys (WS) stored in the key memory (SS) and the direct successors are encrypted authenticated with this key material,
**wherein** the security module (SM) is connected to a central processing unit (ZVE) via a communication interface (KS 1), and in that the central processing unit (ZVE) is connected both to at least one internal memory (IS) and to an external memory (HS) and to at least one internal permanent memory (IP) and to an external permanent memory (EP), in such a way that the operating system (OS) is loaded by a second bootloader (SSB), which is stored in the external permanent memory (EP), and then the operating system (OS) loads the applications, wherein the second stage bootloader (SSB) itself is decrypted and is loaded by a first stage boot loader (FSB), which is stored in the internal permanent memory (IP), and either a public or a symmetric key (PUBOS) in order to verify the operating system (OS), and a symmetric key (KOS) in order to decrypt the operating system (OS) are necessary, and wherein the contents of the internal memory (IS) and of the external memory (ES) are decrypted by the security module (SM) during read accesses by the central management unit (ZVE) or other modules integrated on the ASIC and are re-encrypted during write accesses of the same.

2. Encryption system according to claim 1, **wherein** one or more internal memories (IS) and one or more external memories (ES) are operated in encrypted form via the security module (SM) in such a way, that the content is encrypted and thus the encrypted memories (IS, ES) are considered to be trustworthy.

3. Encryption system as claimed in claim 1, **wherein** both the internal permanent memory (IP) and the external permanent memory (EP) are considered untrustworthy and the data are stored in authenticatable and encrypted form, at least in an authenticatable form.

4. Encryption system as claimed in claim 1, **wherein** the key material is enveloped outside the security module (SM) in an authenticated encrypted key packet and the key material contained is only usable within the security module (SM) in plain text.

5. Encryption system according to claim 1, **wherein** for the use of the security module (SM) in conjunction with inherently non-secure permanent memories, at least one software layer is provided for the correction of unintended changes in the content of permanent memories by means of error correcting codes for bit-kipper/byte errors as safety layer and at least one software layer is provided for encrypting the data with subsequent authentication or integrity protection of the encrypted data as security layer.

6. Encryption system according to one of claims 1 to 5, **wherein** the root keys (WS) cannot be accessed outside the security module (SM).

7. Encryption system according to claim 5, **wherein** branch keys (ZS) are authenticated and decrypted by their respective predecessors in the key hierarchy within the security module (SM) and the key material contained can be used for the decryption/encryption of further key packets for branch keys (ZS) and leaf keys (BS).

8. Encryption system according to claim 7, **wherein** leaf keys (BS) are authenticated and decrypted by their respective predecessors in the key hierarchy within the security module (SM) and the key material contained can be used for the decryption/encryption of code or data.

9. Encryption system according to claim 1, **wherein** the central management unit (ZVE) considers the integrated security module (SM) or in the encasing expression in the form of the smart card (SC) as a coprocessor for fulfilling cryptographic tasks.

10. Encryption system according to claim 1, **wherein** an initial software (FSB) is checked before execution at least for its integrity, authenticity, that each further software stage is authenticated, integrity-checked and decrypted by the preceding software by means of the security module (SM), but is at least authenticated and integrity-checked, so that the integrity, authenticity and privacy of the executed software of the system is ensured during the boot process.

11. A method for an encryption system with a security module (SM) according to claim 1, in which:
- a secure treatment of cryptographic key material outside the security module (SM) is ensured by the use of authenticated-encrypted key packets,
- the integrity, authenticity and privacy of the executed software is ensured by the introduction of a secure autonomous boot process (BP) with routines implemented in hardware, comprising the following steps:
1. Calculation of a checksum for the software stored in an internal permanent memory (IP) or external permanent memory (EP) and subsequent comparison with previously determined checksum,
2. If matching checksums are determined, the software is executed, otherwise access to the security module (SM) is prevented,
3. During the execution, checksums of the executed software are continuously compared with previous values and, in the case of a difference, corresponding measures are taken,
- a secure communication through the use of secure key exchange protocols is carried out,
- arbitrarily low key hierarchies are built up with the aid of the root keys (WS), which are stored in a key memory (SS) and the direct successors are encrypted with this key material in an authenticated manner, so that the implementations do not experience unnecessary restrictions on only one application, and
- the extensibility of the implemented methods is carried out by the retrofitability of cryptographic methods in software, so that an integrity-protected, authenticated and encrypted storage is ensured in non-trustworthy memories,
**whereby** in such a way the operating system (OS) is loaded by a second stage boot loader (SSB), which is arranged in the external permanent memory (EP), and thereafter the operating system (OS) loads the applications, wherein the second stage bootloader (SSB) itself is decrypted and is loaded by a first stage boot loader (FSB), which is arranged in the internal permanent memory (IP), and either a public or a symmetric key (PUBOS) in order to verify the operating system (OS), and a symmetric key (KOS) in order to decrypt the operating system (OS) are necessary, and whereby the contents of an internal memory (IS) and of an external memory (ES) are decrypted by the security module (SM) during read accesses by a central management unit (ZVE) or other modules integrated on the ASIC and are re-encrypted during write accesses of the same.

12. Method according to claim 11, **whereby** the boot process (BP) comprises the following steps:
1. Loading the software of the successor in that a first stage bootloader (FSB) loads software in the form of a second stage bootloader (SSB) and the second stage bootloader (SSB) loads the operating system (OS) and the operating system (OS) loads one or more applications into the internal or external memory (IS, ES).
2. Verification or integrity check on the basis of applied cryptographic methods such as digital signatures or message authentication codes by means of asymmetrical cryptosystem (AK) or symmetrical cryptosystem (SK).
3. If the check is correct, the decryption with a corresponding cryptographic method follows by means of asymmetrical cryptosystem (AK) or of symmetrical cryptosystem (SK).
4. Execute the decrypted software.

13. Method according to claim 11, **whereby** in order to prevent unauthorized modifications, the symmetrical key (KOS) is stored directly in a flash memory and the public key (PUBOS) is stored in a key ring within an SSB image of the key hierarchy (SH), and **whereby** the operating system (OS) is booted as follows :
1. The public key (PUBOS) is used to verify an operating system signature.
2. The symmetric key (KOS) is added to an intermediate SSB key hierarchy (SH).
3. The encrypted operating system code is loaded into a RAM (IS), decrypted and started there.

## Revendications

1. Un système de chiffrement comprenant un ASIC à circuit intégré spécifique à une application, qui comporte une mémoire permanente pour le stockage non volatil du système d'exploitation (OS) d'un processeur et des modules logiciels pour chiffrer la mémoire de données du processeur et qui comporte un algorithme de chiffrement mis en œuvre par matériel, **dans lequel** un module de sécurité (SM) étant intégré dans l'ASIC afin d'amorcer de manière autonome le système d'exploitation (OS), comprenant :
un système de chiffrement symétrique (SK) pour traiter des clés symétriques,
- un système de chiffrement asymétrique (AK) pour l'utilisation de clés publiques et privées,
- un module de génération de fonctions de hachage cryptographique (KH),
- un module pour l'échange sécurisé de clés avec des protocoles d'échange de clés (SP),
- une mémoire de clé (SS) pour le stockage sécurisé de clés racines (WS),
- une gestion de clé (SV) pour l'introduction sécurisée de paquets de clé cryptés authentifiés et
- une ou plusieurs hiérarchies de clés (SH), qui sont basées sur une ou plusieurs des clés racines (WS) stockées dans la mémoire de clés (SS) et les successeurs directs sont cryptées et authentifiées avec ce matériau clé,
en ce que le module de sécurité (SM) est reliée à une unité centrale de traitement (ZVE) par l'intermédiaire d'une interface de communication (KS 1), et en ce que l'unité centrale (ZVE) est reliée à la fois à au moins une mémoire interne (IS) et à une mémoire externe (HS) et à au moins une mémoire permanente interne (IP) et à une mémoire permanente externe (EP), de telle sorte que le système d'exploitation (OS) est chargé par un second chargeur-amorce (SSB), qui est stockée dans la mémoire permanente externe (EP), puis le système d'exploitation (OS) charge les applications, le chargeur d'amorçage de second étage (SSB) elle-même est déchiffrée et est chargée par un chargeur d'amorçage de premier étage (FSB), qui est stockée dans la mémoire permanente interne (IP), et soit une clé publique soit une clé symétrique (PUBOS) pour vérifier le système d'exploitation (OS), et une clé symétrique (KOS) pour décrypter le système d'exploitation (OS) sont nécessaires, et le contenu de la mémoire interne (IS) et de la mémoire externe (ES) étant déchiffré par le module de sécurité (SM) pendant les accès de lecture par l'unité centrale de gestion (ZVE) ou d'autres modules intégrés sur l'ASIC et étant chiffrés pendant les accès d'écriture de celui-ci.

2. Le système de chiffrement selon la revendication 1, **dans lequel** une ou plusieurs mémoires internes (IS) et une ou plusieurs mémoires externes (ES) sont exploitées sous forme chiffrée par l'intermédiaire du module de sécurité (SM) de telle sorte que le contenu est chiffré et ainsi les mémoires chiffrées (IS, ES) sont considérées comme digne de confiance.

3. Le système de chiffrement selon la revendication 1, dans lequel à la fois la mémoire permanente interne (IP) et la mémoire permanente externe (EP) sont considérées comme étant non fiables et les données sont stockées dans une forme authentifiable et cryptée, au moins sous une forme authentifiable.

4. Le système de chiffrement selon la revendication 1, dans lequel le matériau clé est enveloppé à l'extérieur du module de sécurité (SM) dans un paquet clé crypté authentifié et le matériau clé contenu n'est utilisable que dans le module de sécurité (SM) en clair.

5. Le système de chiffrement selon la revendication 1, dans lequel pour l'utilisation du module de sécurité (SM) conjointement avec des mémoires permanentes non sécurisées de manière inhérente, au moins une couche logicielle est prévue pour la correction de changements non intentionnels du contenu de mémoires permanentes au moyen de codes de correction d'erreur pour des erreurs binaires/octets en tant que couche de sécurité et au moins une couche logicielle est prévue pour chiffrer les données avec une authentification ultérieure ou une protection d'intégrité des données chiffrées en tant que couche de sécurité.

6. Le système de chiffrement selon l'une des revendications 1 à 5, dans lequel les clés racines (WS) ne peuvent pas être accédées à l'extérieur du module de sécurité (SM).

7. Le système de chiffrement selon la revendication 5, dans lequel des clés de branche (ZS) sont authentifiées et décryptées par leurs prédécesseurs respectifs dans la hiérarchie de clés à l'intérieur du module de sécurité (SM) et le matériel clé contenu peut être utilisé pour le déchiffrement/chiffrement d'autres paquets clés pour des clés de branche (ZS) et des clés de feuille (BS).

8. Le système de chiffrement selon la revendication 7, dans lequel des clés à feuilles (BS) sont authentifiées et décryptées par leurs prédécesseurs respectifs dans la hiérarchie de clés à l'intérieur du module de sécurité (SM) et le matériel clé contenu peut être utilisé pour le déchiffrement/chiffrement de code ou de données.

9. Le système de chiffrement selon la revendication 1, dans lequel l'unité de gestion centrale (ZVE) considère le module de sécurité intégré (SM) ou dans l'expression d'encapsulation sous la forme de la carte à puce (SC) en tant que coprocesseur pour satisfaire des tâches cryptographiques.

10. Le système de chiffrement selon la revendication 1, **dans lequel** un logiciel initial (FSB) est vérifié avant l'exécution au moins pour son intégrité, authenticité, que chaque autre étage logiciel est authentifié, vérifié en intégrité et déchiffré par le logiciel précédent au moyen du module de sécurité (SM), mais est au moins authentifié et vérifié en intégrité, de sorte que l'intégrité, l'authenticité et la confidentialité du logiciel exécuté du système sont assurées pendant le processus de démarrage.

11. Un procédé pour un système de chiffrement avec un module de sécurité (SM) selon la revendication 1, **dans lequel:**
- un traitement sécurisé de matière de clé cryptographique à l'extérieur du module de sécurité (SM) est assuré par l'utilisation de paquets de clé cryptés authentifiés,
- l'intégrité, l'authenticité et la confidentialité du logiciel exécuté sont assurées par l'introduction d'un processus de démarrage autonome sécurisé (BP) avec des routines mises en œuvre dans le matériel, comprenant les étapes suivantes :
1. Le calcul d'une somme de contrôle pour le logiciel stocké dans une mémoire permanente interne (IP) ou une mémoire permanente externe (EP) et la comparaison ultérieure avec la somme de contrôle précédemment déterminée,
2. Si des sommes de contrôle correspondantes sont déterminées, le logiciel est exécuté, sinon l'accès au module de sécurité (SM) est empêché,
3. Au cours de l'exécution, des sommes de contrôle du logiciel exécuté sont comparées en continu à des valeurs précédentes et, dans le cas d'une différence, des mesures correspondantes sont prises,
- **dans lequel** une communication sécurisée par l'utilisation de protocoles d'échange de clé sécurisés est réalisée,
- des hiérarchies de clés à faible nombre arbitraire sont construites à l'aide des clés racines (WS), qui sont stockées dans une mémoire de clé (SS) et les successeurs directs sont cryptées avec ce matériau de clé d'une manière authentifiée, de telle sorte que les modes de réalisation ne subissent pas de restrictions inutiles sur une seule application, et
- l'extensibilité des procédés mis en œuvre est réalisée par l'aptitude à la rétroréflexion de procédés cryptographiques dans un logiciel, de sorte qu'un stockage protégé, authentifié et chiffré est assuré dans des mémoires non fiables,
de ce fait, le système d'exploitation (OS) est chargé par un chargeur d'amorçage de second étage (SSB), qui est disposé dans la mémoire permanente externe (EP), puis le système d'exploitation (OS) charge les applications, le chargeur d'amorçage de second étage (SSB) elle-même est déchiffrée et est chargée par un chargeur d'amorçage de premier étage (FSB), qui est disposée dans la mémoire permanente interne (IP), et soit une clé publique soit une clé symétrique (PUBOS) pour vérifier le système d'exploitation (OS), et une clé symétrique (KOS) pour décrypter le système d'exploitation (OS) sont nécessaires, et le contenu d'une mémoire interne (IS) et d'une mémoire externe (ES) étant déchiffré par le module de sécurité (SM) pendant les accès de lecture par une unité de gestion centrale (ZVE) ou d'autres modules intégrés sur l'ASIC et étant déchiffrés et chiffrés pendant des accès d'écriture de celui-ci.

12. Le procédé selon la revendication 11, **dans lequel,** le procédé d'amorçage (BP) comprend les étapes suivantes :
1. Chargement du logiciel du successeur en ce qu'un logiciel de charge d'amorçage de premier étage (FSB) charge un logiciel sous la forme d'un chargeur d'amorçage de Second étage (SSB) et le chargeur d'amorçage de second étage (SSB) charge le système d'exploitation (OS) et le système d'exploitation (OS) charge une ou plusieurs applications dans la mémoire interne ou externe (IS, ES).
2. Vérification ou vérification d'intégrité sur la base de procédés cryptographiques appliqués tels que des signatures numériques ou des codes d'authentification de message au moyen d'un cryptosystème asymétrique (AK) ou d'un cryptosystème symétrique (SK).
3. Si la vérification est correcte, le déchiffrement avec un procédé cryptographique correspondant suit au moyen d'un cryptosystème asymétrique (AK) ou d'un cryptosystème symétrique (SK).
4. Exécuter le logiciel déchiffré.

13. Le procédé selon la revendication 11, **dans lequel,** pour éviter des modifications non autorisées, la clé symétrique (KOS) est stockée directement dans une mémoire flash et la clé publique (PUBOS) est stockée dans un anneau de clé à L'intérieur d'une image SSB de la hiérarchie de clés (SH), et le système d'exploitation (OS) étant amorcé de la manière suivante:
1. La clé Publique (PUBOS) est utilisée pour vérifier une signature de système d'exploitation.
2. La clé symétrique (KOS) est ajoutée à une hiérarchie de clés SSB-Intermédiaires (SH).
3. Le code du système d'exploitation chiffré est chargé dans une RAM (IS), déchiffré et démarré.
